# EUROPEAN PATENT SPECIFICATION

(11) **EP 2 267 981 B1**
(45) Date of publication and mention of the grant of the patent: **26.06.2013**
(21) Application number: 10176032.0
(22) Date of filing: 02.05.2006
(51) Int. Cl.: H04L 29/08

(54) **Multi-layered enveloped method and system for content delivery**
Mehrschichtiges Envelope-Verfahren und System zur Inhaltslieferung
Procédé enveloppé multi-couches et système de livraison de contenu

(43) Date of publication of application: 29.12.2010
(62) Divisional of application: 08159429.3
(73) Proprietor: Research In Motion Limited, Waterloo, ON N2L 3W8 (CA)
(72) Inventor: Shenfield, Michael, Mississauga Ontario L4W 5M4 (CA)
(74) Representative: Moore, Barry

(56) References cited:
- EP-A- 1 387 295
- WO-A-2006/010979
- US-A1- 2002 143 791
- US-A1- 2004 073 613
- US-A1- 2006 015 568
- LUOMA NOKIA J PELTOTALO S PELTOTALO TAMPERE UNIVERSITY OF TECHNOLOGY J: "A Metadata Framework for Internet Media Guides: Metadata Envelope" IETF STANDARD-WORKING-DRAFT, INTERNET ENGINEERING TASK FORCE, IETF, CH, 9 December 2003 (2003-12-09), XP015031829 ISSN: 0000-0004
- LUOMA J-P ET AL: "A Metadata Framework for Internet Media Guides: Baseline Data Model" INTERNET CITATION, [Online] XP002312751 Retrieved from the Internet: URL:http://www.dmn.tzi.org/ietf/mmusic/59/ id/draft-luoma-mmusic-img-metadata-03.txt> [retrieved on 2003-12-19]

## Description

The present method and system relates generally to dynamic content delivery in a mobile environment, and in particular to a generic dynamic content delivery architecture in which applications and content providers can be added without changing the architecture.

Users of mobile devices or mobile user equipment (UE) are increasingly becoming more sophisticated in terms of the functionality that they require from their mobile devices and the way that they access data from the mobile devices.

Dynamic content delivery allows users to have information or data pushed to them rather than having to go and seek out the data. Examples of data could include stock quotes, weather updates, traffic updates, dynamic wallpaper, ads, applications or other data desirable to a user.

Current technologies for mobile devices such as wireless application protocol (WAP) have the ability to push content; however, WAP requires websites to be rewritten to satisfy the wireless application protocol and provide users with a uniform site that does not change to accommodate a user's capabilities to view a site.

Other alternatives include SMS based push and broadcast or cell broadcast. In the broadcast case, delivery cannot be customized to the needs of a particular user or the capabilities of a particular device. These systems therefore have no intelligence associated with them. A better solution is required for mobile devices.

WO2006010979 teaches the use of metadata in respect of a particular portion of content data, the metadata specifying content data portion identification, version, and temporal relevance.

US 2002/143791 also discloses nesting metadata with content.

### GENERAL

The present system and method, as disclosed in claims 1, 6, 13 and 14, preferably provide for a dynamic content delivery architecture and system that allows generic applications and content providers to be added to the system without the necessity to modify the architecture. Specifically, the present system and method allows for a mobile device to become a dynamic application platform in which applications can be added and content provided to the mobile device, where the architecture of the dynamic content delivery system does not limit the type of application that can be installed on the device nor the type of content that the device receives.

In one aspect of the present application, metadata is preferably provided and associated with the content to add intelligence to the content for various processing elements within the dynamic content delivery architecture. This architecture may comprise logical components that provide for content provision, service provision including push proxies, a wireless network, push client and client applications.

In a further aspect of the present application, metadata is preferably provided in a layered "enveloped" model for push content metadata. Content may be wrapped with metadata that can be used for processing at each element within a push framework. The metadata for each successive element may be layered, thereby allowing the processing element to extract only the metadata for that element. For example, a content package that includes metadata directed to a push proxy and a client application can include the content with a first level of metadata for the client application, and a second layer of metadata for the push proxy. Thereby, when the envelope reaches the push proxy, the metadata for the push proxy is extracted and applied to the content, and the modified content and metadata for the client application is passed to further processing element.

In another aspect of the present application, the metadata can be split into static metadata (also referred to herein as channel metadata) and dynamic metadata (also referred to herein as content metadata). Static metadata is established preferably at the time of registration of both the application and the content provider. However, the channel metadata can be established at a later time. The channel metadata preferably specifies processing rules that are specific to the type of content that is being delivered and the application requirements for content type.

Dynamic metadata may conversely be associated with the specific content being passed.

In an aspect of the present application, a plug-in registration model may be presented within the push framework. A generic push client and a push proxy are identified, each having various processing blocks or modules that allow these elements to process both content and metadata. These blocks can be directed to process either the content being passed, the metadata being passed or both the content and the metadata being passed.

Plug-in registration further provides for the passing of service manifests and application manifests to allow the establishment of channel metadata between a content provider and an application. Specifically, service manifests can be used for registering a content provider with the push framework, and an application manifest can be used for registering an application with the push framework.

In another aspect of the present application, a method for pushing syndicated content is preferably provided which allows for the handling of data based on its priority and based on network factors including the cost for sending data, the type of network connected to or the users' preferences. An optional mixed push/pull model for syndicated content allows for either a push proxy to push content when network conditions become favorable or for a client to pull content when network conditions become favorable or when the user requires the content.

In order to accommodate various mobile devices, a further aspect of the present application provides for content fragmentation for content, including non-linear content fragmentation. Non-linear content fragmentation includes augmenting the content with metadata allowing the data to be recomposed once it has been passed to the client.

The present application preferably provides a method for adding processing intelligence to content payload in a dynamic content delivery architecture having at least a first processing element and a second processing element, the method comprising the steps of: creating a first envelope, said first envelope including content payload and second processing element metadata, said second processing element metadata adapted to be run on said second processing element; and forming a second envelope, said second envelope containing said first envelope and first processing element metadata adapted to be run on said first processing element. The method may further comprise the steps of: extracting, at said first processing element, said first processing element metadata; using said first processing element metadata on said first envelope, creating a processed first envelope; and delivering said processed first envelope to said second processing element. The method may further comprise the step of, prior to said using and delivering steps, applying metadata related to said channel on said first envelope. The method may further comprise, at said first processing element, adding metadata to said first envelope. Said creating and forming steps may be performed by a content provider. The method may further comprise the step of creating a third envelope, said third envelope comprising said second envelope and third processing element metadata for a third processing element. Said first processing element metadata may comprise any of processing parameters, processing rules, a processing handler, processing handler code, a processing handler reference, a link to a processing handler, a link to processing handler code, and/or a link to processing handler rules.

The present application may further provide a content envelope for a dynamic content delivery architecture, the content envelope comprising: a content payload; content metadata for a first processing element in said dynamic content delivery architecture, said content processing metadata and content payload forming a first envelope; and second content metadata for a second processing element in the dynamic content delivery architecture, the second content processing metadata being nested with said first envelope to form a second envelope. Said first processing element and said second processing element may comprise any of a push proxy, a push client, or a client application. The second content metadata for the second processing element is arranged to provide complete instructions for said second processing element. The content metadata for the first processing element may be arranged to provide complete instructions for said first processing element. The content metadata may comprise any of processing parameters, processing rules, a processing handler, processing handler code, a processing handler reference, a link to a processing handler, a link to processing handler code, and/or a link to processing handler rules.

The present application may further provide a method of processing an envelope having metadata for a processing element and metadata and content for successive processing elements in a dynamic content delivery architecture, the method comprising the steps of: extracting the metadata for the processing element from the envelope; using the metadata on the metadata and content for successive processing elements, thereby creating a processed nested envelope; and delivering the processed nested envelope to one of the successive processing elements. The may further comprise: utilizing channel metadata for the content on said metadata and content for successive processing elements. Said channel metadata may be provisioned or propagated to the processing element prior to the processing element receiving the envelope. The processing element may be one of a push proxy or a push client. Said metadata for the processing element comprises any of processing parameters, processing rules, a processing handler, processing handler code, a processing handler reference, a link to a processing handler, a link to processing handler code, and/or a link to processing handler rules.

The invention may also provide a system for processing an envelope having metadata for a processing element and metadata and content for successive processing elements in a dynamic content delivery architecture, the system comprising: means for extracting the metadata for the processing element from the envelope; means for using the metadata on the metadata and content for successive processing elements, thereby creating a processed nested envelope; and means for delivering the processed nested envelope to one of the successive processing elements.

The invention may also provide a computer program product for adding processing intelligence to content payload in a dynamic content delivery architecture having at least a first processing element and a second processing element, the computer program product comprising a computer readable medium embodying program code means executable by a computing device, system or apparatus for implementing the method for adding processing intelligence to content payload in a dynamic content delivery architecture as described above.

The invention may also provide a computer program product for processing an envelope having metadata for a processing element and metadata and content for successive processing elements in a dynamic content delivery architecture, the computer program product comprising a computer readable medium embodying program code means executable by a computing device, system or apparatus for implementing the method of processing an envelope having metadata as described above.

The present disclosure may also provide a method for adding processing intelligence to content payload in a dynamic content delivery architecture having at least a first processing element and a second processing element, the method comprising the steps of: creating a first envelope, said first envelope comprising content payload and further comprising second processing element metadata, said second processing element metadata adapted to be run on said second processing element; and forming a second envelope, said second envelope containing said first envelope and first processing element metadata adapted to be run on said first processing element.

In one embodiment said first processing element metadata and said second processing element metadata may be specific to the content payload.

In one embodiment the method may further comprise the step of propagating metadata related to a channel for said content payload to said first processing element and said second processing element.

In one embodiment the method may further comprise the step of provisioning said first processing element and said second processing element with metadata related to a channel for said content payload.

In one embodiment said at least a first processing element and a second processing element may comprise any of a push proxy, a push client or a client application.

In one embodiment said method may further comprise the steps of: extracting, at said first processing element, said first processing element metadata; using said first processing element metadata on said first envelope, creating a processed first envelope; and delivering said processed first envelope to said second processing element.

In one embodiment the method may further comprise the step of, prior to said using and delivering steps, applying metadata related to said channel on said first envelope.

In one embodiment the method may further comprise, at said first processing element, adding metadata to said first envelope.

In one embodiment said creating and forming steps may be performed by a content provider.

In one embodiment the method further comprises the step of creating a third envelope, said third envelope comprising said second envelope and third processing element metadata for a third processing element.

In one embodiment said first processing element metadata comprises any of processing parameters, processing rules, a processing handler, processing handler code, a processing handler reference, a link to a processing handler, a link to processing handler code, and/or a link to processing handler rules.

The present disclosure may further provide a content envelope for a dynamic content delivery architecture, the content envelope comprising: a content payload; content processing metadata for a first processing element in said dynamic content delivery architecture, said content processing metadata and content payload forming a first envelope; and second content processing metadata for a second processing element in the dynamic content delivery architecture, the second content processing metadata being nested with said first envelope to form a second envelope.

In one embodiment said first processing element and said second processing element may comprise any of a push proxy, a push client, or a client application.

In one embodiment the second content metadata (622) for the second processing element may be arranged to provide complete instructions for said second processing element.

In one embodiment the content metadata (630) for the first processing element may be arranged to provide complete instructions for said first processing element.

In one embodiment content metadata may comprise any of processing parameters, processing rules, a processing handler, processing handler code, a processing handler reference, a link to a processing handler, a link to processing handler code, and/or a link to processing handler rules.

The present disclosure may further provide a method of processing an envelope having a first metadata for a processing element and a second metadata and content for successive processing elements in a dynamic content delivery architecture, the method comprising the steps of: extracting the first metadata for the processing element from the envelope; using said first metadata on said second metadata and content for successive processing elements, thereby creating a processed nested envelope; and delivering the processed nested envelope to one of the successive processing elements.
In one embodiment the method further comprises: utilizing channel metadata for the content on said metadata and content for successive processing elements.

In one embodiment said channel metadata may be provisioned or propagated to the processing element prior to the processing element receiving the envelope.

In one embodiment the processing element may be one of a push proxy or a push client.

In one embodiment said metadata for the processing element may comprise any of processing parameters, processing rules, a processing handler, processing handler code, a processing handler reference, a link to a processing handler, a link to processing handler code, and/or a link to processing handler rules.

The present disclosure may further provide a system for processing an envelope having a first metadata for a processing element and a second metadata and content for successive processing elements in a dynamic content delivery architecture, the system comprising: means for extracting the first metadata for the processing element from the envelope; means for using said first metadata on said second metadata and content for successive processing elements, thereby creating a processed nested envelope; and means for delivering the processed nested envelope to one of the successive processing elements.

The present disclosure may further provide a computer program product for adding processing intelligence to content payload in a dynamic content delivery architecture having at least a first processing element and a second processing element, the computer program product comprising a computer readable medium embodying program code means executable by a computing device, system or apparatus for implementing all the steps of the methods herein.

The present disclosure may further provide a computer program product for processing an envelope having metadata for a processing element and metadata and content for successive processing elements in a dynamic content delivery architecture, the computer program product comprising a computer readable medium embodying program code means executable by a computing device, system or apparatus for implementing all the steps of the methods herein.

These and other aspects will be identified in more detail with respect to the drawings.

### BRIEF DESCRIPTION OF THE DRAWINGS

The present application will be better understood with reference to the drawings, in which:
**Figure 1** is a block diagram of a basic architecture for a dynamic content delivery system;
**Figure 2** is a block diagram showing alternative architectures of the dynamic content delivery system of **Figure 1****;**
**Figure 3** is the block diagram of **Figure 1** showing content and metadata flow;
**Figure 4** is a block diagram showing a push proxy that can be used in association with the present system and method;
**Figure 5** is a block diagram showing a push client that can be used in association with the present system and method;
**Figure 6** is a block diagram showing a multilayer envelope model of content and metadata;
**Figure 7** is the block diagram of **Figure 6****,** showing processing steps dynamic metadata for each envelope;
**Figure 8** is the block diagram of **Figure 6****,** additionally showing processing using static and dynamic metadata;
**Figure 9** is a block diagram showing a registration process for an application to a single shared push client;
**Figure 10** is a block diagram showing a registration process of an application to a push container managing a pool of push clients;
**Figure 11** is a block diagram showing an application registering to a content processor and socket listener;
**Figure 12** is a block diagram showing a content provider registering with a single shared push proxy;
**Figure 13** is a block diagram showing a content provider registering with a push container managing a pool of push proxies;
**Figure 14** is a flow diagram showing registration messages between a content provider and client application;
**Figure 15** is a block diagram showing interaction during registration between a push client and push proxy;
**Figure 16** is a block diagram showing interaction during registration between a push proxy and a content provider;
**Figure 17** is a flow diagram showing the flow of content and metadata between a content provider and processing elements;
**Figure 18** is block diagram showing an exemplary transform application for content;
**Figure 19** is a block diagram of a content syndication model;
**Figure 20** is a block diagram of a linear fragmentation process;
**Figure 21** is a block diagram of a non-linear fragmentation process; and
**Figure 22** is a block diagram of an exemplary mobile device that could be used in association with the present method and system.

### DESCRIPTION OF PREFERRED EMBODIMENTS

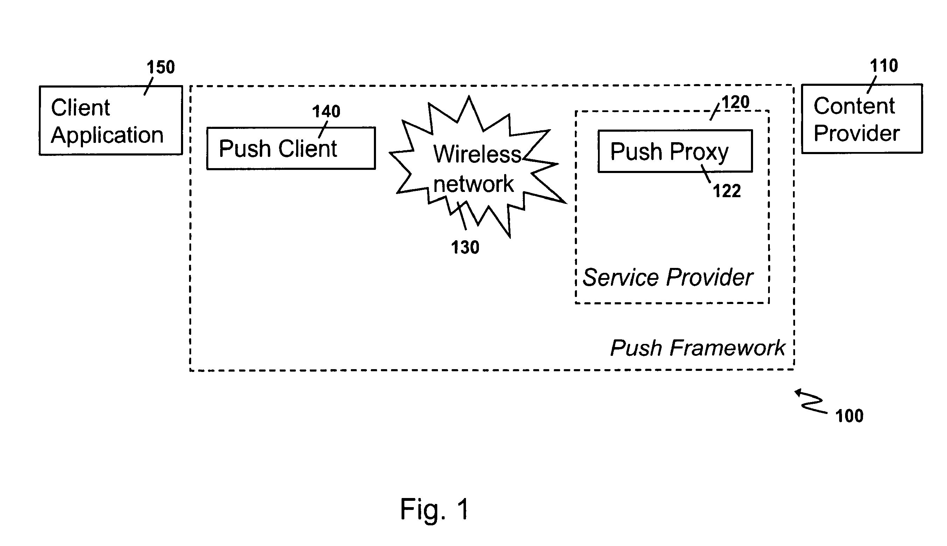

Reference is now made to **Figure 1****.** A generic push system for delivering dynamic content to a client application is illustrated. A system of **Figure 1** is a simplified **system** and shows logical components that need to be in a dynamic content delivery architecture; however, one skilled in the art will appreciate that other components could exist or that various components could be grouped together.

Architecture **100** includes a content provider **110.** Content provider **110** is arranged to provide dynamic content to users that are subscribed with content provider **110.** Examples can include, for example, a website selling books. A user may register with content provider **110** to obtain a list of newly released books within specified genres. Other examples could include news sites which might provide headlines to users on a periodic basis, traffic sites which might provide up-to-date traffic information to users during certain periods of the day, stock market sites which could provide updated stock quotes or currency exchange rates to users, among others.

As will be described in more detail below, content provider **110** registers with a service provider **120** in order to allow clients of the service provider to receive content from content provider **110.** Service provider **120** includes a push proxy **122** that acts as a proxy for a client or a client application and provides a destination for content provider 110 to send content.

Service provider **120** communicates over wireless network **130** with a push client **140** that is located on a mobile device. Push client **140** will be described in more detail below. Push client **140** receives the content that is being delivered from content provider **110** and can communicate the content with a client application **150,** which ultimately consumes the content.

Within the present specification, reference to content provider **110,** service provider **120,** push proxy **122,** wireless network **130,** push client **140** or client application **150** is a reference back to the architecture of **Figure 1****.**

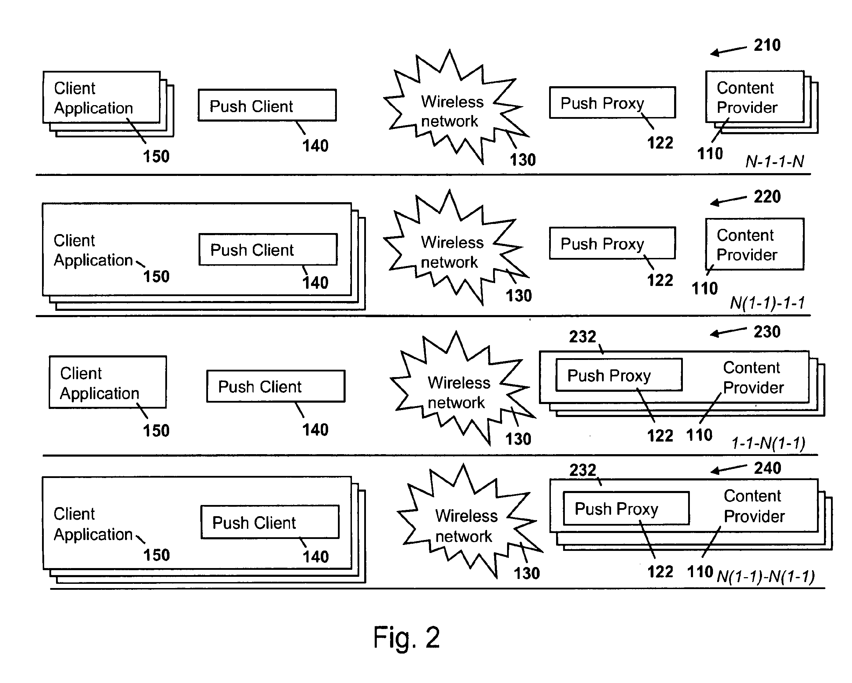

Referring to **Figure 2****,** it will be appreciated by those skilled in the art that the components of **Figure 1** are merely logical components and are not necessarily separate physical components. **Figure 1** illustrates a generic architecture in which one content provider **110,** one push proxy **122,** one push client **140** and one client application **150** exist. Alternatives are illustrated in **Figure 2****.**

Specifically, a first alternative architecture **210** includes multiple content providers **110** communicating with a push proxy **122.** Push proxy **122,** as in the architecture of **Figure 1****,** communicates over wireless network **130** with a push client **140.** Further, multiple client applications **150** exist in architecture **210.** This is therefore an N-1-1-N system having multiple content providers **110** and multiple client applications **150.**

Architecture **220** of **Figure 2** includes one content provider **110** communicating with and registered to push proxy **122.** Further, push proxy **122** communicates over wireless network **130** with multiple push clients **140.** Each push client **140** communicates with a client application **150.** Architecture **220** therefore groups the logical components of a client application 150 and a push client **140** and is an N(1-1)-1-1 system.

Architecture **230** of **Figure 2** has multiple push proxies **122,** each communicating with a content provider 110. Each push proxy and content provider combination **232** communicates over wireless network **130** with a generic push client **140,** which in turn communicates with client application **150.** This is an 1-1-N(1-1) system.

In architecture **240** of **Figure 2****,** a content provider **110** and push proxy **122** grouping **232** communicates over wireless network **130** with a generic push client **140** and client application **150** combination. This is therefore an N(1-1)-N(1-1) system.

As will be appreciated by those skilled in the art, other alternatives are possible. The above shows various logical components, which can be in separate physical components or grouped together. For example, a push client can be imbedded in an application, common shared clients can be used by multiple applications or other alternatives.

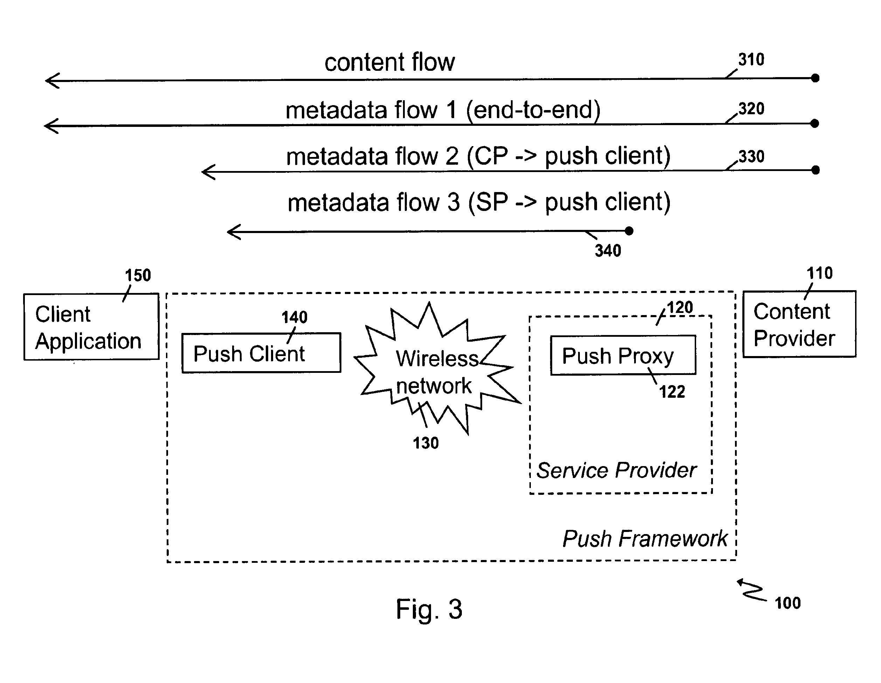

Reference is now made to **Figure 3****.** In order to add intelligence to a system, content is associated with a metadata. Metadata, in this case, is defined as data that can be used by a processing element to manipulate the content. As will be appreciated, a generic push system requires metadata to allow various content providers and applications to exist within the system. The metadata can be in various forms, including processing parameters or rules, or a processing handler, code or reference provided directly or a link to a processing handler, code or rules in another location.

As can be seen in **Figure 3****,** content passes from content provider **110** to client application **150** and is illustrated by arrow **310.** Metadata, which provides instructions to various components within the architecture **100** can also pass between components within architecture **100,** usually along with the content. For example, arrow **320** illustrates metadata that originates at the content provider and is transparent to the delivery system until it reaches a client application **150.**

Arrow **330** shows metadata created by content provider **110** that is intended for the push client **140,** and thus only flows to generic push client **140.**

Arrow **340** illustrates metadata generated by service provider **120** and intended for the push client **140,** and thus is first associated with the content at the push proxy **122** and stripped from the content at generic push client **140.** Examples of where this could occur include agreements between a user and a service provider regarding a billing plan and the level of service to be provided, where the service provider can use the metadata to limit the services available or provide enhanced services.

The flow of metadata and the role of metadata is described in more detail below.

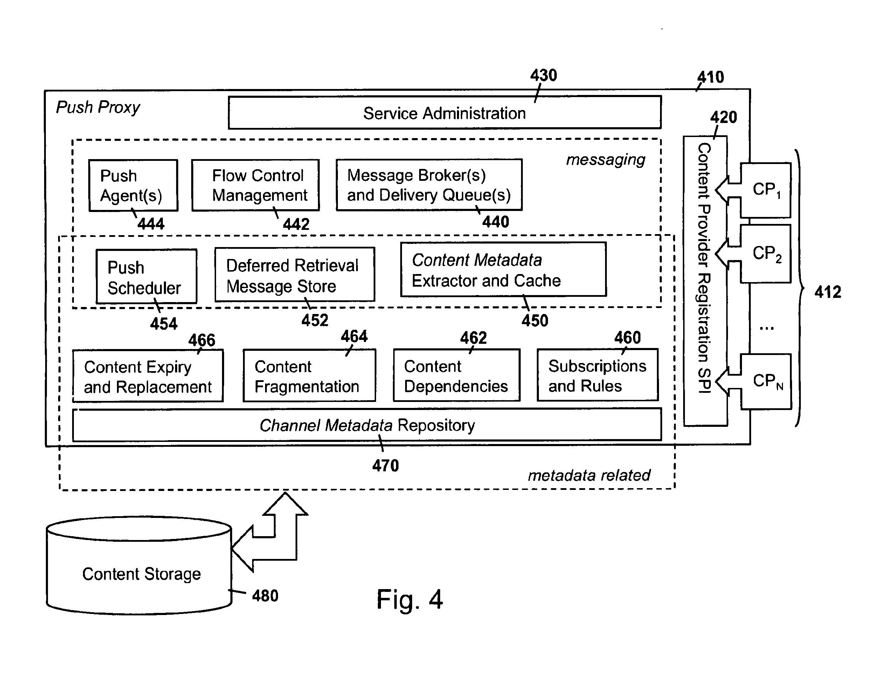

Reference is now made to **Figure 4. Figure 4** illustrates a detailed exemplary push proxy **410** which can be used in association with the present system and method. As will be appreciated by those skilled in the art, push proxy **410** could be the same as push proxy **122** from **Figures 1** and **2****.**

Push proxy **410** of **Figure 4** includes various elements that enable push proxy **410** to operate in a generic push environment. This facilitates flexibility since the push proxy is not limited to interaction with specific content providers or push clients, but instead can be adapted to a dynamic environment. The elements described below for push proxy **410** are preferable have within push proxy **410,** but the elements are not exhaustive, and other elements are possible. Further, certain elements may be omitted from push proxy **410,** with the remaining elements still able to perform generic push services.

Push proxy **410** includes content providers **412** registered to it. Content providers **412** register with a content provider registration service provider interface (SPI) **420.** As is described in more detail below, it is desirable in this registration that the content provider **412** includes certain information for the channel being established, referred to herein as channel metadata. Content providers **412** can be the same as content providers **110** of **Figure 1****.**

Push proxy **410** further includes a service administration block **430** to administer the push proxy service.

Push proxy **410** includes various modules to deal with both the content and the metadata associated with that content. A first module is the message broker and delivery queue **440,** which is a subsystem that consumes messages from content provider **412** and manages the content delivery queue. As will be appreciated by those skilled in the art, not all content for all client applications can be delivered at once and a delivery queue needs to be established in order to deliver the content in due course. For example, a device may be out of coverage and content may need to be stored.

Push proxy **410** further includes a flow control management block **442.** Flow control management block **442** allows for the control of content flow. For example, a mobile station with limited space may only be able to receive a certain amount of information. In this case, the mobile device, through a push client **140** as illustrated in **Figure 1****,** may ask push proxy **410** to stop the flow of data to push client **140.** The flow control management block **442** deals with this.

Alternatively, the mobile device can be off-line. Flow control management block **442** stops and starts the flow of data to push client **140** when content cannot be delivered as received by push proxy **410.**

A further component of push proxy **410** is push agents **444.** Push agents **444** are responsible for sending data to clients.

As will be appreciated by those skilled in the art, blocks **440, 442** and **444** deal with messaging only, and are not metadata related. In other words, the blocks handle the content of the messages, but not any metadata associated with the content.

A further component of push proxy **410** is the content metadata extractor and cache block **450.** Content metadata extractor and cache block **450** operate on enveloped content metadata. Specifically, in the envelope model of metadata system, which is described in more detail below, each logical component within the system can have metadata associated with content processing. This metadata allows the logical component to perform actions on the content. Each logical component thus needs to be able to extract the metadata that is associated with it.

Content metadata extractor and cache block **450** is responsible for extracting metadata that is associated with push proxy **410** and for caching this metadata. The caching function allows optimization by eliminating the need to pass identical metadata in subsequent content envelopes from the same content provider. The extraction and caching of metadata are described below.

Deferred retrieval message store block **452** is used when it is not efficient to deliver content, or parts of it, to a client application. The deferred retrieval message store block **452** can be used to store content that is not delivered to the client until it is efficient to send the content, or until the content is pulled by the client. The deferred retrieval message store could also be used to cache auxiliary content that could be optionally send to or pulled by the client depending on client application navigation through already delivered content.

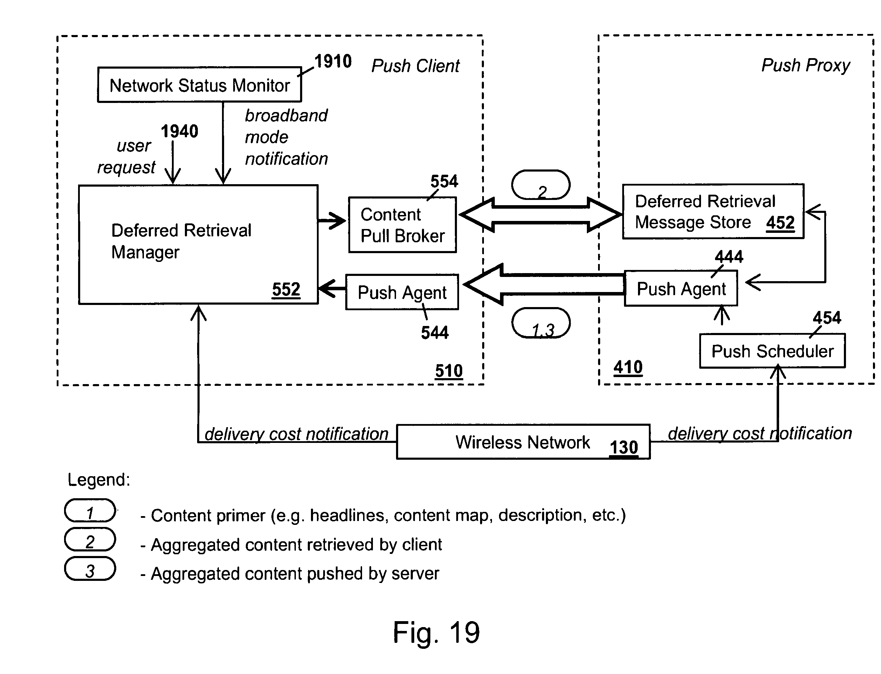

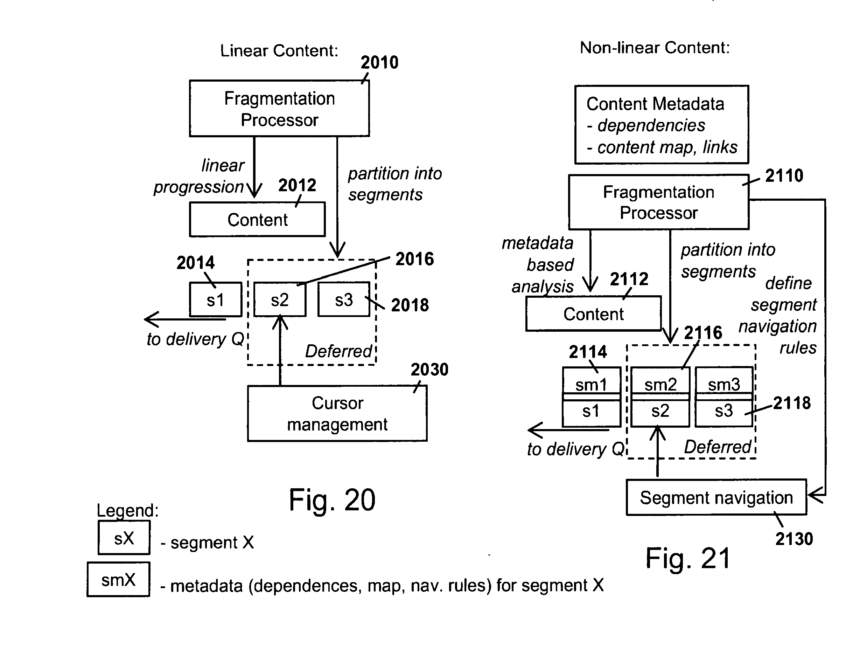

The purpose of deferred retrieval message store block **452** is better explained below with reference to **Figure 19** and **21****.** By way of example, deferred retrieval message store block **452** may be used is the case where a user has requested location information, such as a restaurant close to the location of the user. The content provider or the service provider may have a model of providing information where advertisers can pay to add their information to search requests. Thus, the user that's requesting restaurant information for a location may also have information about stores, golf courses, gyms or other services close to their location attended to their request. A content provider bundles the restaurant information requested with the additional information and passes it to push proxy **410.**

Push proxy **410** can, based on the metadata provided, create a content package to send to the client. The content package could include the information requested by the client, as well as a digest or summary of related information that the user may be interested in. The summary is sent to the user, but the deferred retrieval message store block **452** stores the actual data that was received from content provider **110.** Thus, if in the future the user wishes to obtain more detailed information about information within the digest, this information is already stored at push proxy **410.**

An alternative use for deferred retrieval message store block **452** is in the case where a user cannot accept the entire content at once. For example, if it is not feasible or economical to send all content to device, part of the content can be stored until a later time, when it can be pulled by the client or pushed when predefined rules are met. These rules can be specified by the network or service conditions by certain network or service conditions being satisfied. This is described in more detail with reference to **Figure 19** below.

Push scheduler **454** schedules delivery slots for clients. As described above, in some situations it may not be efficient to push all of the content at once. Push scheduler **452** can determine that it will push some information immediately and the rest according to a predefined schedule. Also, push scheduler **454** may use nature of the content to determine when the content should be pushed. Specifically, metadata may indicate that some content is a high priority or has an expiry that is limited in time, and this content may be pushed immediately, whereas content that has been indicated to have a low priority or with no expiry may be pushed later when conditions for passing data are more favorable.

As will be appreciated by those skilled in the art, blocks **450, 452** and **454** deal with both the content of the message and the metadata that is associated with the message.

Subscription and rules block **460** tracks applications that are registered to receive a service and monitors rules on how to handle particular content being delivered. Content is typically delivered based on a subscription by the client or on behalf of the client. The user, for example if they want a particular service, can actively request subscriptions. Subscriptions can be made on behalf of a user, for example, if the user has signed an agreement with their service provider **120** to receive a benefit for a service. This could include the case where a user receives a preferred rate as long as the user agrees to receive a certain number of advertisements each day. In this case, the service provider **120** may make the subscription to the advertisement provider on behalf of the client.

When an application is deleted on a mobile device or when the application unregisters from a subscription, subscription and rules block **460** can unsubscribe that user.

Content dependencies block **462** is used by push proxy **410** to advertise services that a mobile device user can utilize. Thus, if a mobile device user does not have a screen or bandwidth or memory sufficient for the service, content dependencies block 462 could block the advertisement of that service to the user.

Content fragmentation block **464** is used to fragment content. This could be used, for example, if the mobile device is unable to receive all of the content at once. Content fragmentation block **464** is used to break the content into various components. It can be used in association with deferred retrieval and message store **452** to store fragmented content that has not yet been delivered.

Content expiry and replacement block **466** is used for two purposes. First, this block can be used to monitor subscriptions. Each subscription has an expiry time and when this expiry time is met, the subscription can be ended.

Also, content expiry and replacement block **466** can be used to monitor information. Certain content will have time limits on the validity of the information. For example, a traffic application used to monitor rush hour traffic will be very time dependent. If, for some reason, push proxy **410** is unable to deliver the content immediately to a mobile device, this content is stored in content storage **480** for future delivery. However, if the content is not delivered within a certain specified time period, then it could expire and not be delivered at all.

Similarly, content replacement deals with a situation where the information is being updated. For example, a client application that is receiving stock quotes may only want the latest stock quote. Thus, if the push proxy **410** is unable to deliver the stock quote to push client **140** and a subsequent stock quote is received from a content provider **110,** metadata within the subsequent stock quote can indicate that it should be used to replace the previous stock quote. Replacement of stored information rather than adding all information to a delivery queue frees space within content storage **480.**

Channel metadata repository **470** is used to store channel metadata, which is described in more detail below.

The above describes an exemplary push proxy **410** that can be used with the method and systems herein. The blocks and elements of push proxy **410** allow push proxy **410** to be used in a generic dynamic content delivery system where the type of content and handling of the content at an application can vary and is not predetermined.

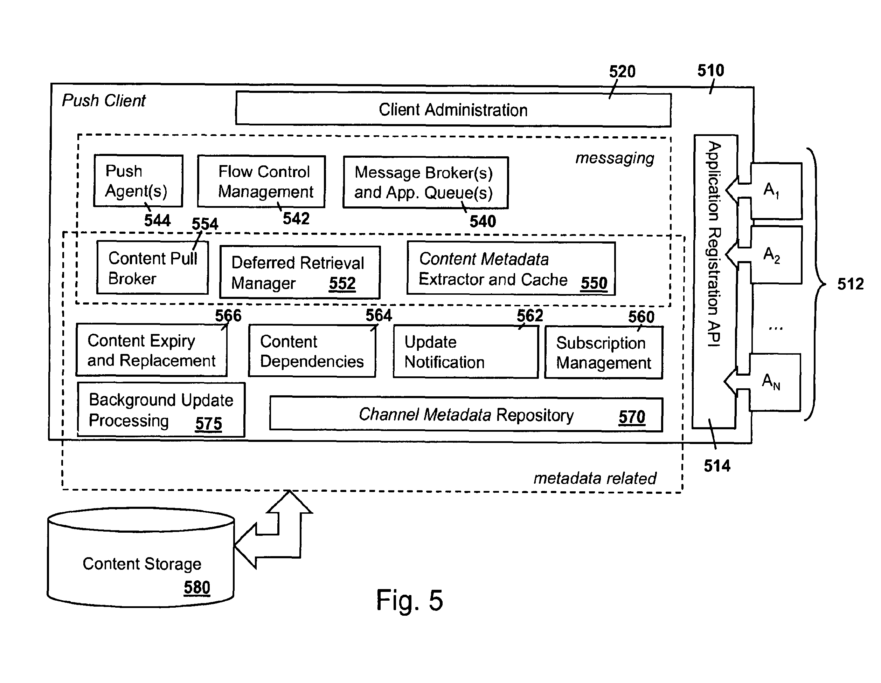

Reference is now made to **Figure 5. Figure 5** illustrates a push client **510** that can be used in association with the system and methods herein. Push client **510** can be the same as push client **140** from **Figures 1** and **2****.**

As will be appreciated by those skilled in the art, a push client **510** that is to be used in a generic system in which the content and processing of the content is not predetermined should include blocks or modules that can be used to accommodate both the content and the metadata associated with the content. The blocks defined with regard to **Figure 5** are not meant to be exhaustive, and other blocks could also exist within a push client **510.** Further, the blocks within push client **510** can, in some instances, be omitted without restricting the functionality of the other blocks within push client **510.**

A push client **510** services applications, and one or more applications **512** can register with push client **510.** The application registration uses an application provider interface **514** as the interface for registration and application provider interface **514** can further be used to extract channel metadata for the application, as described in more detail below.

Push client **510** includes client administration **520** used to administer the push client **510.**

As with push server **410** of **Figure 4****,** push client **510** includes various blocks that deal with messaging, various blocks that deal with metadata, and various blocks that deal with both messaging and metadata.

Message broker and application queues **540** handle messages from push proxy **410** for delivery to applications **512.** An application queue is a queue of messages for applications **512.**

Flow control management block **542** is used to notify push proxy **410** of **Figure 4** to stop pushing content or to resume pushing content. This can be used, for example, when the push client **510** has a limited amount of memory that it can accept pushed content. In this case, before the push content is consumed push client **510** needs to stop the flow of content from push proxy **410.** Once the content has been consumed, flow control management block **542** can be used to start the flow of data again.

Push agents **544** within push client **510** are used to receive information from push proxy **410** of **Figure 4****.**

As will be appreciated by those skilled in the art, message brokers and application queues **540,** flow control management block **542,** and push agents **544** deal exclusively with messaging and not with metadata.

Content metadata extractor and cache block **550** is used to extract dynamic metadata destined for push client **510.** As indicated above with reference to push proxy **410** of **Figure 4****,** any of the processing elements in the dynamic content delivery architecture could have metadata destined for them and this metadata needs to be extracted. Thus metadata destined for push client 510 is extracted by content metadata extractor and cache block **550.**

Further, the content metadata extractor and cache block **550** is preferably adapted to cache metadata. Metadata for push client **510** that does not change between a first content package and a second content package does not need to be passed, saving processing time at push client **510** by not requiring the extraction of this metadata, and further saving network resources by not requiring metadata for push client **510** to be passed over wireless network **130.**

Deferred retrieval manager **552** is used for analyzing fragments of content that are received and putting the content together in the correct way. As described in more detail below, data can be either linear or non-linear. If the data is non-linear, then metadata is required in order to reconstitute it, and this is done by deferred retrieval manager **552.** The deferred retrieval manager **552** also is adapted to analyse a digest of information available in the deferred retrieval store **452** of push proxy **510** and drives the content pull broker **554** (described below) to retrieve this information when required by user. This includes predictive retrieval when content navigation enters a certain branch of the content structure graph or when bandwidth or cost conditions are satisfied

Content pull broker **554** is used in a push/pull model where the push client **510** is also able to pull content in certain situations. Such situations are described below in more detail with reference to **Figure 19****.**

As will be appreciated by those skilled in the art, content metadata extractor and cache **550,** deferred retrieval manager **552** and content pull broker **554** deal both with messaging content and with metadata.

Subscription management block **560** is the same as subscription and rules block **460** of **Figure 4****.** Specifically, subscription management block **560** is used to manage subscriptions. If an application de-registers or is deleted from a mobile device then subscription management block **560** ends the subscription. The subscription management block **560** can also re-subscribe on behalf of a client application when subscription channel expires.

Update notification block **562** works with client applications and is used to notify the applications that new content is waiting for them. This can be done in one of three ways:
a. A first way that update notification block **562** can notify an application **512** is for push client **510** to send the content to application **512** directly.
b. A second way that update notification block **562** can notify applications 512 of new content is to store the content in content storage **580** and to optionally notify applications 512 that content is waiting. Notification in this case is optional. Specifically, if an application 512 knows that information destined for it is stored within a specific memory block, one option for the application discovering that is has new data is to periodically poll the memory location to see whether there has been something written to it. Alternatively update notification block **562** can send a message to application **512** indicating that it has new data an possibly the location that the data is stored.
c. A third way that update notification **562** can notify applications **512** of new content is to store the content internally and notify the application. The application can then call on the push client to retrieve the content.

Content dependency block **564** is the same as content dependency block **462** of **Figure 4****,** and can determine whether to advertise the service to the mobile device.

Content expiry and replacement block **566** is the same as content replacement and expiry block **466** of **Figure 4****.** The expiry of content and replacement of content can thus be handled at push client **510** in addition to the push server or push proxy.

Channel metadata repository **570** is used to store channel metadata for application **512.**

Background update processing module **575** is used for performing updates when an application **512** is unavailable. The background update allows, for example, the replacement of data with newer data inside the application storage. Thereafter, when a user starts the application, the data displayed by the application is correct and updated.

Background update processing module **575** uses processing rules translate content into a format acceptable for an application. It can execute and process content in content store **580.**

By way of example, a task list that is updated for a contractor overnight could have tasks pushed to it. The task application is not started during this time, and background update processing module **575** can be used to update the content for the task application. This could be done with code for handling an extensible mark-up language (XML) file, and could exist on the device in a file called "handler.exe". Background update processing block **575** on push client **510** can run handler.exe, passing the XML document as a parameter. The handler then constructs the task into the application's internal format.

Once the background update processing block **575** of push client **510** constructs the task into the application internal format, it then can read the task into the task list from content storage **580** and append the new task to the list. It then can store the modified back to content storage **580** for when the task application next connects to push client **510.**

**Figure 5** therefore illustrates a push client **510** that can be used in a generic dynamic content delivery system, where content and processing of the content is dynamic and not predetermined. The blocks described above with reference to the push client **510** of **Figure 5** are used to accommodate the dynamic nature of the system.

As indicated above with reference to **Figure 3****,** content is associated with metadata to provide intelligence for the processing of the content. In accordance with the present method and system, metadata can be divided into two types of metadata. Specifically, static (channel) metadata and dynamic (content) metadata.

Due to the unlimited possibilities of types of content providers and applications, metadata is critical in order to build generic systems. The only way to handle the specific type of content is through metadata.

Static metadata is metadata that provides rules on how to process specific types of content. Static metadata can be broken into various levels of abstraction and include for example structural information about the content itself. For example, a Real-time Simple Syndication (RSS) document could be delivered with an RSS 2.0.XSD structure, and all content from that content provider will be delivered with this structure.

A further level of abstraction for static metadata includes the provision of processing rules for content subtype. This could be application specific. Thus, for example, a financial news application indicates that data should be extracted from a financial news RSS stream, stored in a predefined location, and that the application should be notified about the arrival of the information. The application always requires content destined for it to be handled in this way.

The static metadata (also referred to herein as channel metadata) stays the same throughout the subscription between the application and the content provider, and thus the static metadata can be established once for each element within the architecture and for each content delivery channel. In one embodiment this is done at the time of registration of the application or the content provider.

Dynamic metadata is metadata that is associated with a particular piece of content. For example, expiry information associated with a particular piece of data or replacement rules and information associated with a particular piece of data (i.e. document K replaces document L).

As indicated above with reference to **Figures 4** and **5****,** each processing entity can receive both static and dynamic metadata that is directed at that processing entity. Thus push proxy **410** uses the content metadata extractor and cache **450** to extract the dynamic metadata, and content expiry and replacement block **466** is used to replace undelivered content with newer content received at push proxy **410.**

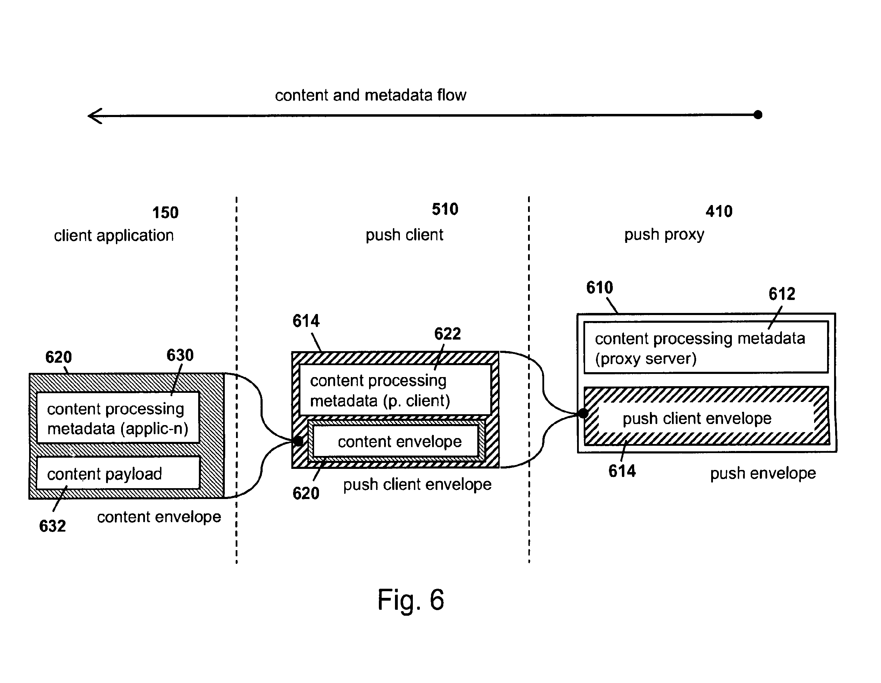

Reference is now made to **Figure 6. Figure 6** illustrates a multilayer envelope model for content metadata.

A push proxy **410** receives a push envelope **610** that includes content processing metadata for the proxy server **612** and a push client envelope **614.** The push proxy **410** extracts content processing metadata **612** and uses this metadata to process push client envelope **614.** Metadata **612** dictates to push proxy what to do with the push client envelope **614.**

Push client envelope **614** is passed to push client **510** where it is broken into a content envelope **620** and a content processing metadata **622.** Content processing metadata **622** is used by push client **510** to process the content envelope **620.** For example, this can be used to instruct push client **510** to perform replacement of previously delivered content envelope **620** with the latest envelope if client application **150** is only interested in the latest version of the content.

Content envelope **620** is passed to client application **150.** Content envelope **620** includes content processing metadata **630** for the application and the content payload **632** that is to be consumed by client application **150.**

As will be appreciated by those skilled in the art, the nesting of envelopes in accordance with **Figure 6** provides for a rich dynamic environment in which processing can occur at any processing element of the architecture and which the content provider **110** can specify how specific content is to be dealt with. In one embodiment, metadata directed to a particular logical element is opaque to other processing elements.

Alternatively, the service provider **120** can also add metadata at push proxy **410** for processing at push client **510** or client application **150.**

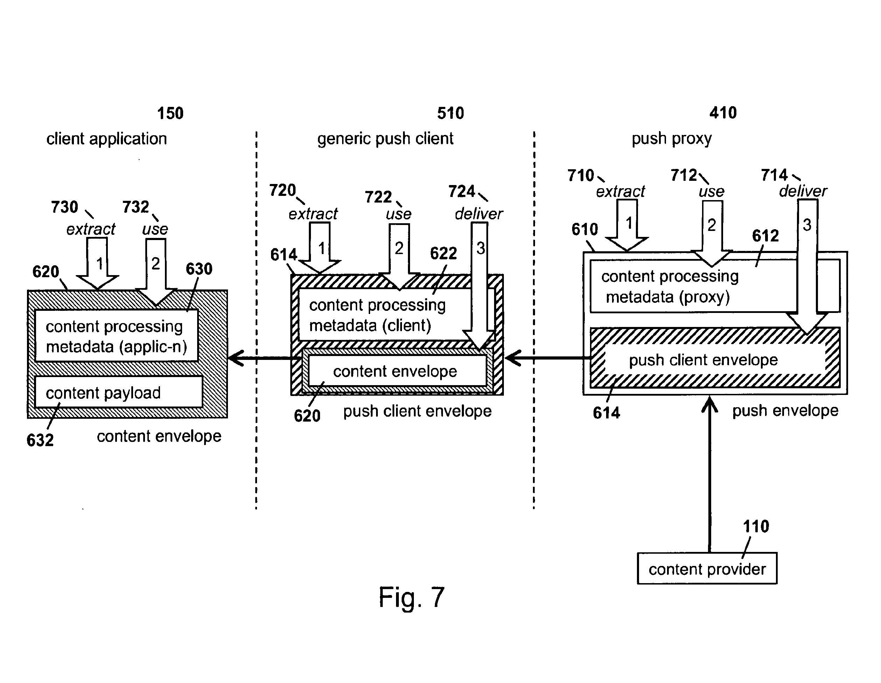

Referring to **Figure 7****,** this figure shows the envelope model of **Figure 6** and the steps that each processing element takes with an envelope. As illustrated in **Figure 7****,** push proxy **410** first extracts the metadata from push envelope **610.** This is done in step **710.**

In step **712,** push proxy **410** uses the metadata to process the push client envelope **614.** In step **714,** push proxy **410** delivers the push client envelope **614** to push client **510.**

Similarly, push client **510,** in step **720** extracts the content processing metadata **622** from push client envelope **614.** In step **722,** push client **510** uses the content processing metadata **622** on content envelope **620.** In step **724,** the push client **510** delivers content envelope **620** to client application **150.**

In step **730,** client application **150** extracts the content processing metadata **630** and in step **732** uses the content processing metadata **630** on content payload **632.**

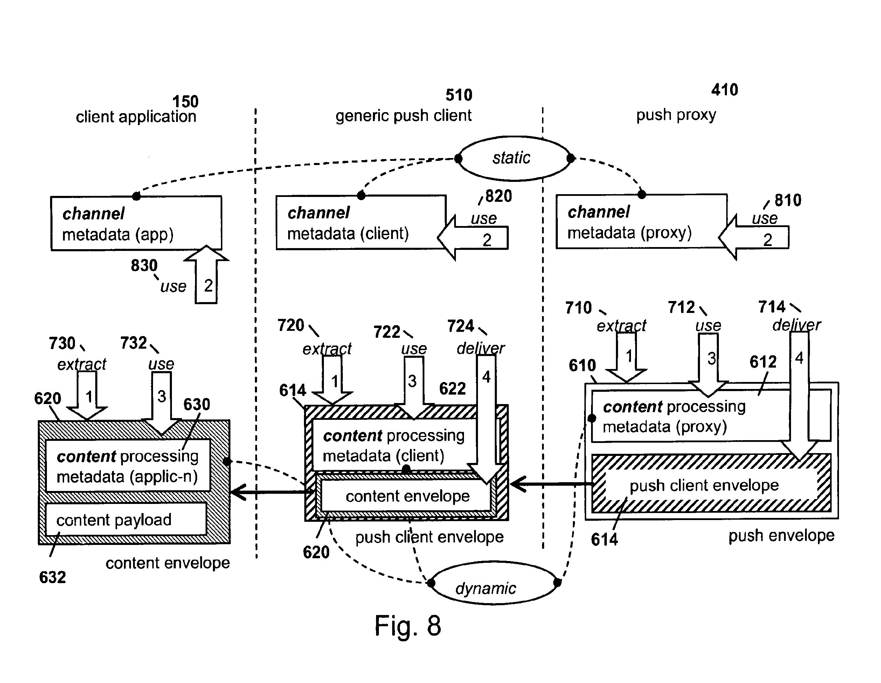

Referring to **Figure 8****,** this figure shows the method as illustrated in **Figure 7** with the additional step of the use of static or channel metadata. Specifically, after the metadata has been extracted in step **710** from push envelope **610,** the push proxy **410** next uses the static channel metadata to process the push client envelope in step **810.** In step **712,** push proxy **410** next processes the content processing dynamic metadata **612.** Push proxy **410** next delivers the push client envelope **614** in step **714.**

Similarly, push client **510** extracts the content processing metadata **622** in step **720.** Push client **510** then uses the channel metadata in step **820** on the content within content envelope **620.** Push client **510** then, in step **722,** uses the dynamic content metadata in content processing metatadata **622** prior to delivering content envelope **620** to client application **150** in step **724.**

Client application **150** first extracts, in step **730,** content processing metadata **630.** It then uses the channel metadata in step **830** on content payload **632.** Client application **150** then uses, in step **732,** content processing metadata **630** on content payload **632.**

As will be appreciated by those skilled in the art, the above model therefore allows for both static metadata to be applied for the channel along with dynamic metadata that is associated with the particular content being sent.

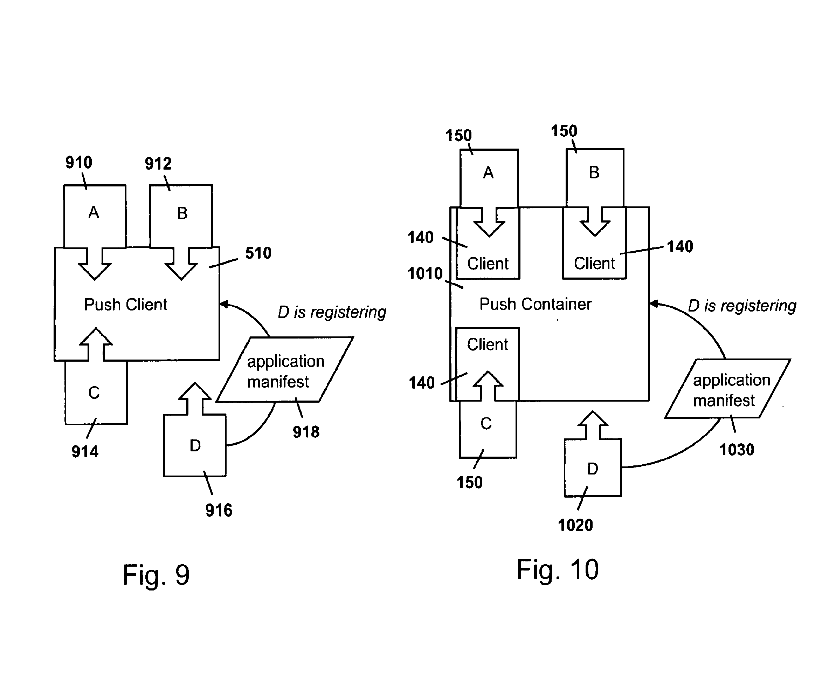

Reference is now made to **Figure 9****.** As will be appreciated from **Figure 5****,** push client **510** can serve multiple target applications **512** on a mobile device. An efficient runtime registration mechanism is required where applications can register with the dynamic content delivery framework without interrupting service for other applications.

Referring to **Figure 9****,** push client **510** includes three applications, specifically applications **910, 912** and **914** that are already registered with the push client. As will be appreciated, the plug in model is important because new devices can allow unlimited application types to be installed on the device. Further, applications can be installed dynamically, leading to a mobile device becoming an application platform. Because the device can be an application platform, it must be capable of dynamically incorporating new applications.

As seen in **Figure 9****,** application **916** wants to register with push client **510.** Application **916** includes an application manifest **918** that, in a preferred embodiment, provides the channel metadata for the application. Specifically, application manifest **918** provides information to push client **510,** and ultimately push proxy **410** and content provider **110** from **Figure 1** with the static metadata for the application. This can include, but is not limited to, what type of content the application expects, how the content will be delivered, whether the application needs notification, or other channel information that would be evident to those skilled in the art having regard to the present system and method.

Application **916** therefore registers with push client **510,** providing application manifest **918** to establish a channel to a content provider for servicing application **916.**

Referring to **Figure 10****,** an alternate model could be the model described with regard to architecture **220** of **Figure 2****.** Specifically, in the model of **Figure 10****,** a client application **150** is paired with a push client **140.** Each of the client application **150/push** client **140** pairs are coordinated with a push container **1010.**

When application **1020** wishes to register with push container **1010,** a client **140** is created, or if it already exists is used, by push container **1010.** Further, in registration, the application **1020** provides an application manifest **1030** to push container **1010,** thereby providing channel metadata (static metadata) for application **1020.**

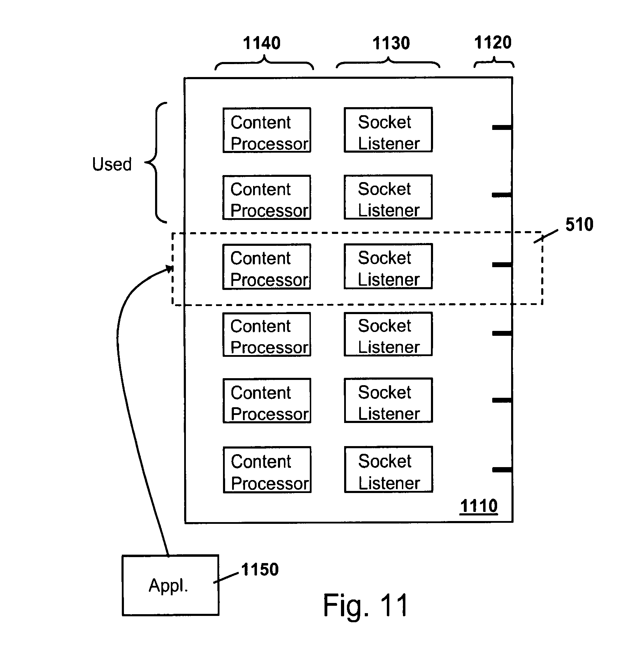

An alternative illustration of **Figure 10** is shown in **Figure 11****.** Specifically, a push container **1110** manages/maintains a pool of push clients. When an application registers with the container it obtains a dedicated push client **510,** which in the simple case could be represented by a pair of a socket listener **1130** and content handler. The push client is returned to the pool when the application unregisters from the container (and content delivery service) or is deleted from the device.

Push container 1110 includes sockets **1120** for communication. Further, push container **1110** includes socket listeners **1130** and content processors **1140** assigned to a particular socket.

As seen in **Figure 11****,** various content processor and socket listener pairs are used by previously registered applications **150.**

When a new application **1150** wants to register with push container **1110,** a new content processor and socket listener **1120** and **1130** are assigned to service application 1050.

The above therefore provides for a generic push framework in which a client application **150** that is new can be implemented and registered with a push client **510** or push container **1010** or **1110,** thereby allowing the device to become an application platform capable of dynamically incorporating new applications. The passing of an application manifest **1030** or **918** from **Figures 9** and **10** above allows for the establishment of channel metadata, thereby allowing the content to be processed according to the application's requirements.

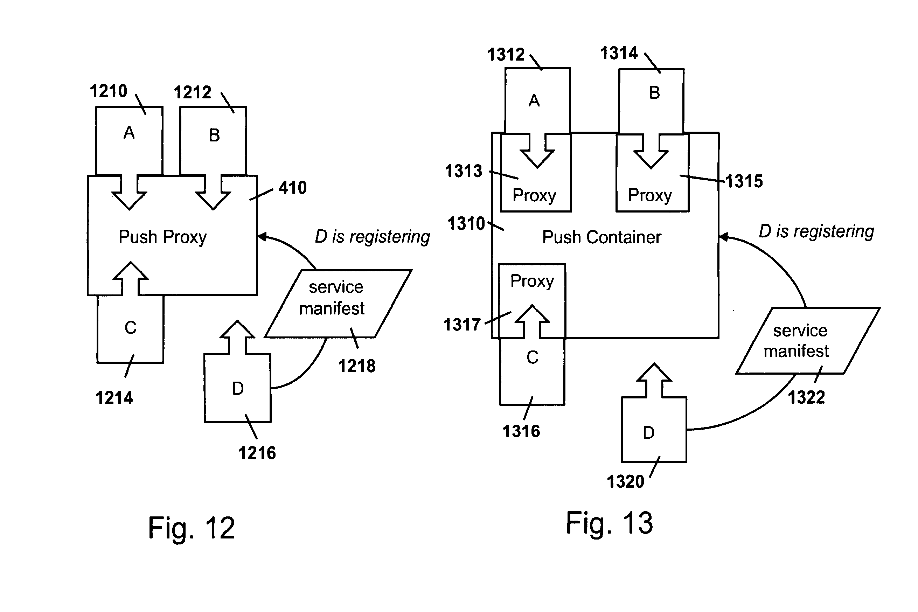

Referring to **Figure 12****,** content providers **110** similarly need to register with a push proxy **410.** As seen in **Figure 12****,** push proxy **410** includes three content providers, namely, **1210, 1212** and **1214,** already registered with push proxy **410.** Content provider **1216** desires to register with push proxy **410.**

Similarly to the application manifest **918** illustrated in **Figure 9** provided by an application **916** when registering with push client **510,** content provider **1216** includes a service manifest **1218** that is passed to push proxy **410** when content provider **1216** registers. Service manifest **1218** includes information concerning the type of information that the content provider will provide, how often it provides this information, the format of the information, and any other information that is useful for the service or for advertisement of the service. Other information is possible.

Push proxy **410** thus uses service manifest **1218** to establish channel (static) metadata for content provider **1216.**

Referring to **Figure 13****,** an alternative embodiment, represented by architecture **230** of **Figure 2****,** is to have a push container with a number of push proxy **122** and content provider 110 pairings. As with **Figure 12****,** various applications could already be registered with push container **1310,** and in the example of **Figure 12****,** applications **1312, 1314** and **1316** are already registered with push proxies **1313, 1315** and **1317** respectively.

A new application **1320** wants to register with push container **1310.** Thus, push container **1310** creates a new proxy (not shown) or uses an existing proxy (not shown) with which it associates content provider **1320.** Further, content provider **1320** provides service manifest **1322** to describe the content that content provider **1320** will be providing, thereby allowing the establishment of channel metadata.

As will be appreciated by those skilled in the art, the embodiments of **Figures 9** and **10** show two options for push clients, either with shared applications or with dedicated push clients per application. One skilled in the art will realize that other embodiments are possible. Similarly, with respect to **Figures 12** and 13, a push proxy with multiple content providers registered to it is shown or a dedicated push proxy for each content provider, and embodied in a push container is shown.

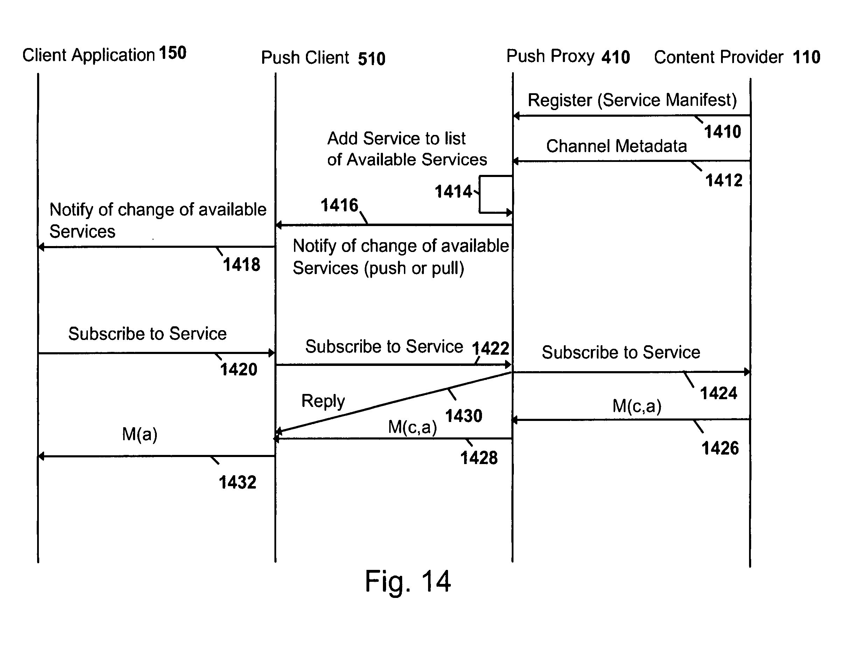

With reference to **Figure 14****,** messaging between a content provider **110** and a client application **150** is shown. Content provider **110** provides a registration message to **push proxy 410.** This message can include the service manifest which can be used to provide channel metadata to push proxy **410.** This is done in step **1410.**

Content provider **110** may also or alternatively provide channel metadata in a subsequent message, as illustrated by step 1412.

Push proxy **410** then adds a service to a list of available services (the service catalogue) in step **1414.**

An optional step in the example of **Figure 14** is for push proxy **410** to notify push client **510** of the new service available in step **1416** and this notification may be propagated to a client application **110** in step **1418.**

As will be appreciated by those skilled in the art, steps **1416** and **1418** are optional, and other alternatives include client application **150** pulling the service catalogue periodically from push proxy **410** to view new services.

When a user or service provider for client application **150** decides that client application **150** should subscribe to a service, it sends a subscription message in step **1420.** The subscription message is further passed to push proxy **410** in step **1422.**

Once push proxy **410** receives the subscription message in step **1422,** two options are available. A first option is to send a message **1424** to content provider **110** for a subscription and then receive a message envelope that includes metadata back in step **1426.** The metadata could be device or device type specific.

Alternatively, push proxy **410** may receive the subscription message in step **1422** and immediately, based on information already provided by content provider **110** and stored on push proxy **410** reply in step **1430** to push client **510.** This reply is propagated to the client application **150** in step **1532.** As will be appreciated, the reply can include channel metadata specific for content provider **110.**

The difference in models can be dependent on who is customizing the data for the application. As will be appreciated, content provider **110** provides the best customization of content compared with other processing elements. However, service provider **120,** through push proxy **410,** can also provide for customization of content.

Further, as will be appreciated, the structure of the content could be dependent on the data that the application requires. For example, in a financial application, the application may want both stock quotes and currency rates. The following XML may be used:

```
     <FIN>
        <quotes>
        <quote ticker = ABC>
           18.54
       </q uote>
          <quote ticker = XYZ>
                123.45
     </q uote>
       </quotes>
      <rates>
        <rate id = "US-CAN">
             1.15
        </rate>
          <rate id = "US-EURO">
              0.85
             </rate>
      </rates>
    </FIN>
```

If the user only wanted quotes and no currency exchange, the structure could change to:

```
     <FIN>
    <quote ticker = ABC>
          18.54
     </q uote>
       <quote ticker = XYZ>
          123.45
       </q uote>
   </FIN>
```

The metadata can provide information to the application on the structure that of the data being passed.

Thus, two models exist. Static metadata can be provided to push proxy **410** and to push client **510** either during registration or afterwards. Alternatively, the metadata for push proxy **410** and push client **510** can be pre-provisioned, i.e. information is stored at a push client or a push proxy until an application registers with a client.

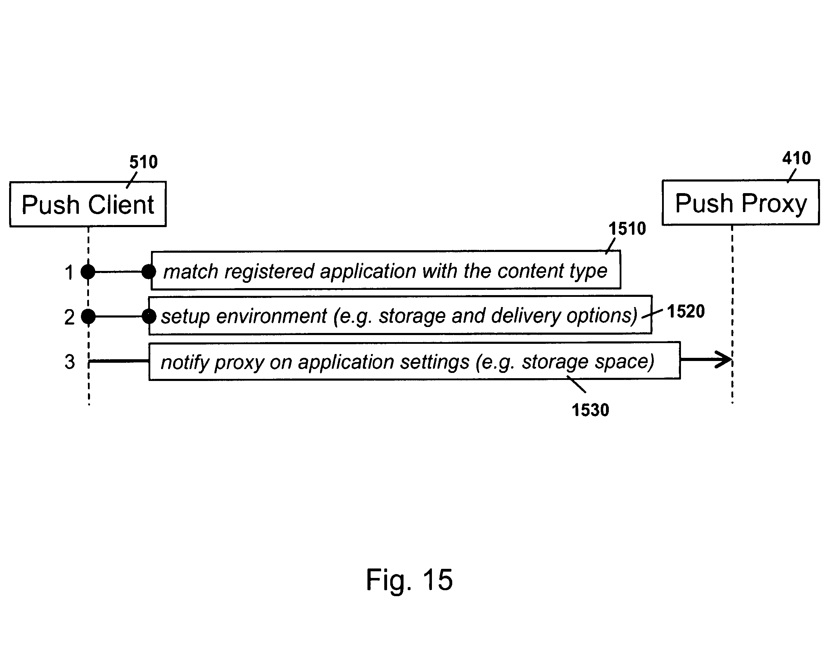

Reference is now made to **Figure 15. Figure 15** shows logical steps that occur upon registration of an application with a push client **510.**

Once an application registers with push client **510,** a first step **1510** is to match the registered application with the content type required by the application. This is known from the application manifest **918** as illustrated in **Figure 9****.**

A second step **1520** is to set up the environment for the application. These include but are not limited to storage and delivery options for the application. For example, an application may limit transmissions to a predetermined amount of data. The push client **510** in a flow control event, or if the application or client is out of touch, may require the caching of the data for the application and optionally to notify the application that data is waiting.

A third step **1530,** is to notify push proxy **410** of the application settings. This includes for example available storage for the application or push client **510.** As will be appreciated, push proxy **410** should not push more data than push client **510** can store. Thus, the application settings could include an upper limit of the data that is passed. Referring to **Figures 4** and **5****,** this could invoke content fragmentation block **464** to fragment the content if it is greater than the application can process. Also, if the data is non-linear, content dependencies block **462** may be required to create metadata for content dependencies block **564** of **Figure 5** in order to allow content dependencies block **564** to reconstitute the data.

Referring again to **Figure 15****,** step **1530** can also indicate preference on data delivery. For example, the application may prefer certain types of data over others and these types of data may be given priority. Thus step **1530** can be used to establish a delivery schedule where data of type "A" is delivered immediately while data of type "B" can be delivered at a deferred time.

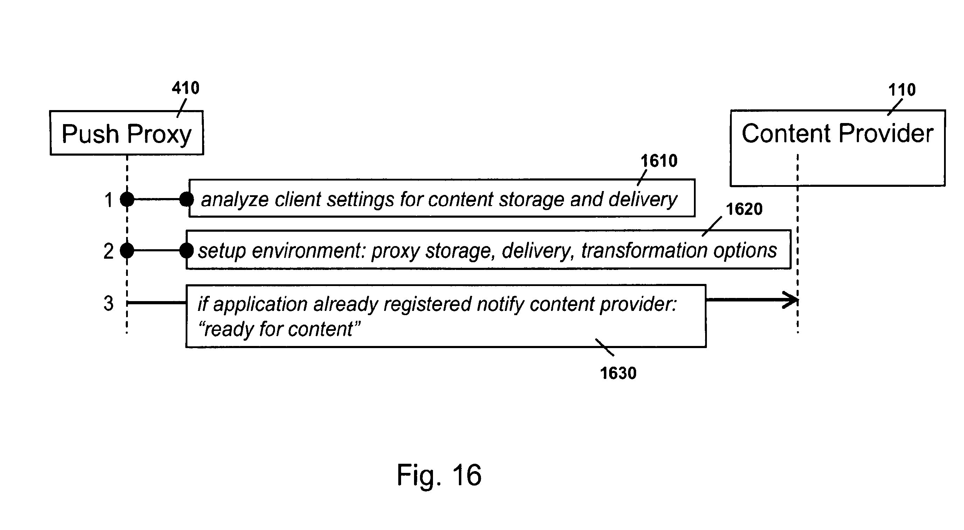

Reference is now made to **Figure 16****.** When a content provider **110** registers with a push proxy **410,** various steps are performed. A first step **1610** includes analyzing required client settings for content storage and delivery. This can be used, for example, for service advertisement in order to identify push clients **510** on devices capable of consuming content from content provider **110.**

A second step **1620** allows push proxy **410** to set up the environment, including proxy storage, delivery options, transformation options, among others.

In step **1630,** push proxy **410** can check whether the application is already registered to obtain content from a content provider **110.** If this is the case, the application is ready to receive content and a notification from push proxy **410** to content provider **110** that the delivery channel is established and the application is ready for content can be sent.

Step **1630** can occur, for example, if an application is pre-installed on a device prior to content provider **110** coming on-line. Thus, the application is waiting for content provider **110** to become available or the application is of generic type (e.g. a browser or RSS Viewer) and is capable of consuming information from multiple content providers. In an alternative setting, if content provider **110** is already available before the application is installed, the notification step **1530** in **Figure 15** can be used to initiate the content starting to flow from content provider **110** to a client application **150.**

As will be appreciated with reference to **Figure 16****,** client settings can include certain information such as the available storage size used for content partitioning, the queue size used for flow control, delivery scheduling including a push interval, whether the client is retrieving information from the proxy, creating a pseudo-push mode, customization options such as the screen size of a mobile device, among others.

As will be further appreciated, service catalogues may differ for different clients. For example, certain clients may be able to utilize more data, have a different screen size or other conditions which make the client more suitable for a content provider **110** than a device that cannot handle this amount of information, has a smaller screen size, etc. Thus, push proxy **410** can create a service catalogue for specific client applications based on knowledge of those client applications, and only those devices with that client application **150** installed can receive information concerning the content provider.

As will be further appreciated, in some cases the application may be installed based on a service provider and content provider without the user intervention. For example, if content provider **110** registers with push proxy **410,** a user of a mobile device may have a contract obligation to accept a certain application. Thus push proxy **410** could notify push client **510** that it is ready to install an application and push the application to push client **510.** This could, for example, include a user that has agreed to receive a certain number of ads each month in order to get a preferred rate on their mobile plan. The content provider **110** could be an ad provider and push proxy **410** may therefore push an advertisement displaying application to push client **510,** which might be serviced by an application installer registered with push client **410,** thereby having the content provider **110** and the service provider **120** entirely driving the process.

The above therefore provides for a plug-in registration model in a push framework where each application or content provider registers and provides an application manifest or service manifest respectively. The application manifest or service manifest is used to establish channel metadata at the push proxy **410** and push client **510** either during registration or subsequently. Thereafter, when an application **150** registers and a content provider **110** registers, content can start flowing between the application **150** and the content provider **110.**

With reference to **Figures 4** and **5****,** the channel metadata is stored in a channel metadata repository **470** and **570.** It is, however, also advantageous to store dynamic metadata on the various processing elements within architecture **100** if the dynamic metadata is repeated. As will be appreciated, this will save processing on the push proxy **410** since current metadata extractor **450** does not need to extract the same metadata over and over. Further, processing by various modules such as content expiry and replacement module **466** or **566** do not need to be updated for each piece of content that is passed. Since push proxy **410** could be working with a large number of push clients **510,** this processing saving for each content message could be significant. Further, bandwidth could be saved by not having to pass the metadata over a fixed line between content provider **110** and push proxy **410** or over the air between push proxy **410** and push client **510.**

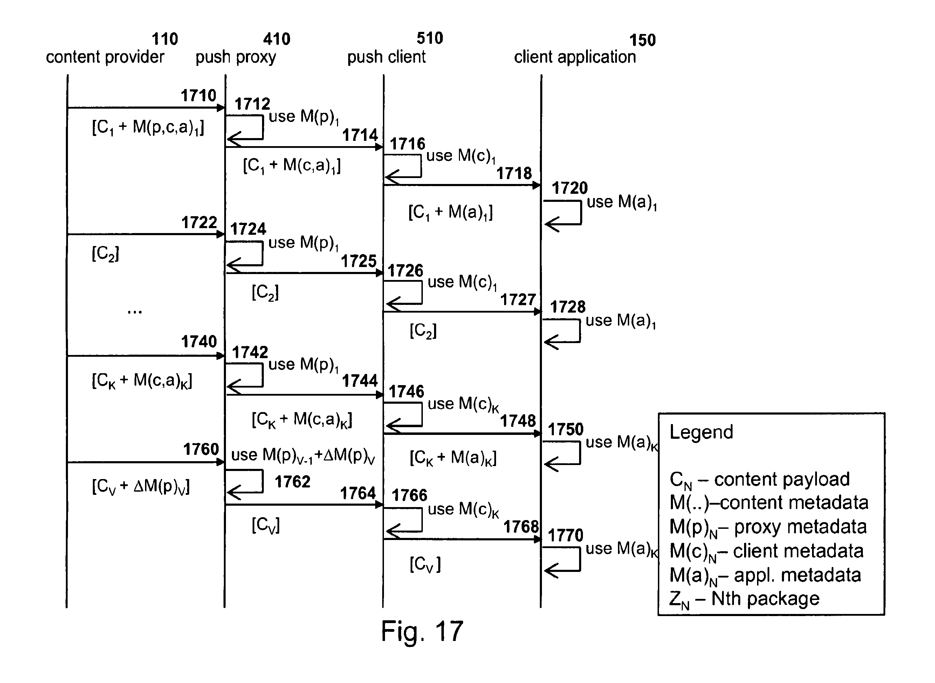

Reference is now made to **Figure 17. Figure 17** illustrates an example of run time flow where your last metadata version is stored by the processing element.

As seen in **Figure 17****,** content provider **110** provides a content envelope which includes content [C₁+M (p,c,a) ₁]. This means that a first content payload is being sent along with metadata that includes proxy metadata, client metadata and application metadata. This is sent in step **1710.**

At step **1712,** push proxy **410** uses the proxy metadata as illustrated by the phrase "use M(p)₁". Further, in step **1714** the content plus the metadata that includes the client metadata and the application metadata is passed to push client **510.**

In step **1716,** push client **510** uses the client metadata and further in step **1718,** passes the content payload to client application **150.** Client application **150** uses, in step **1720** the application metadata and further consumes the content payload.

As seen in step **1722,** a second content payload, designated by C₂, has the same metadata as the first content payload. Because each processing element, namely, push proxy **410,** push client **510** and client application **150,** cached the metadata for content provider **110,** the metadata does not need to be passed again but instead already resides on the processing element.

Thereafter, in step **1724** the push proxy **410** uses metadata that was previously cached for the push proxy **410.** Similarly, in steps **1726** and **1728** the push client **510** uses the client metadata and the client application **150** uses the application metadata respectively. Content is passed, without metadata, in steps **1725** and **1727.**

As illustrated in step **1740,** content may have new metadata for the push client **510** and client application **150,** but may keep the old metadata for the push proxy **410.** In this case, the metadata that is passed in step **1740** includes only client metadata and application metadata. In step **1742,** the push proxy **410** uses the cached proxy metadata and passes the content payload along with the new client metadata and application metadata in step **1744.**

In step **1746,** the push client **510** uses the new client metadata that was passed to it and further passes the content payload and application metadata in step **1748.**

In step **1750,** the client application uses the new application metadata and further consumes the content payload.

As will be appreciated by one skilled in the art, various configurations could exist concerning which metadata has changed and which metadata stays the same, and only the metadata that has changed is passed to the processing element that requires it. As will be appreciated by those skilled in the art, the processing element, if it does not receive new metadata, goes back to the cached metadata that it has stored and uses this on the content payload.

In a further alternative embodiment, incremental changes can also be made to metadata. For example, in step **1760** a new content payload along with a delta metadata version can be passed to service proxy **410.** The delta of the proxy metadata can include a difference between the proxy metadata previously passed and the current metadata that the content should be processed with. The push proxy **410** composes the metadata by adding the previous metadata with the delta and then using this to process the content payload in step **1762.** Thereafter, since there has been no change, in step **1764** the content payload is sent by itself and in step **1766** the push client **510** uses the previously cached client metadata.

Push client then passes the content payload in step **1768** to client application 150, which uses the previously cached location metadata on the content payload in step 1770 and then it consumes the content payload.

An example of where incremental data may be used is a situation in which a content provider tells the proxy that of the existent fields within the content payload, 30 should be extracted to send to client application **150.** In a subsequent transaction, two additional fields that are important for that piece of content payload may be deemed necessary to be passed to the client application **150** by content provider **110.** The content provider could therefore, using an incremental change, tell push proxy to extract the two additional fields and add them to the 30 fields that were previously extracted. By only having to pass the delta, i.e. the two additional fields, the processing time for extracting the metadata at push proxy **410** is reduced, thereby optimizing the process.

As will be further appreciated, metadata can come in various forms. It could be compiled such as native code or_interpreted code such as Java or C#. The metadata can also be a data/properties file that indicates to use certain properties. In another alternative embodiment, it can be binary content, for example a transformation such as a XSLT transformation on an XML document.

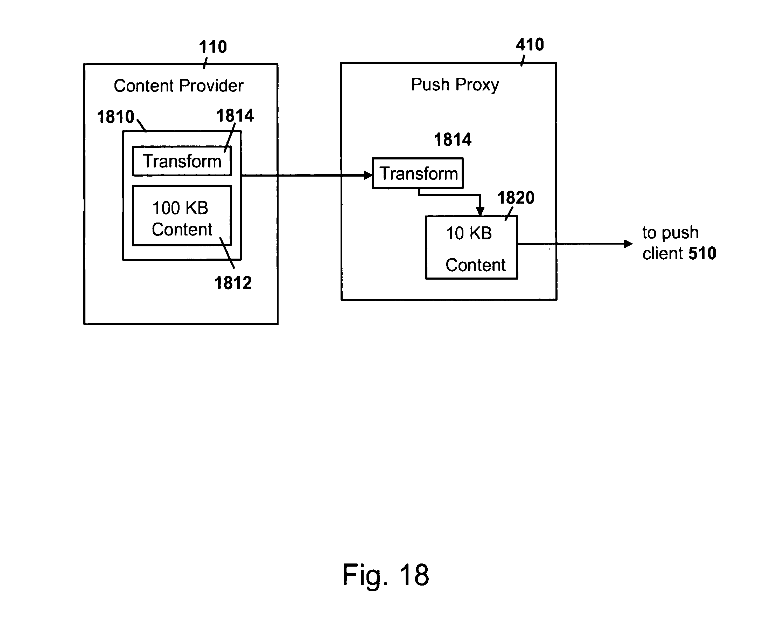

The above can be used for various applications to provide intelligence for content being transferred to a specific client application. It can also provide for rich content providers that can provide content for various applications merely based on the metadata that they provide with their data. This can be illustrated by way of example in **Figure 18****.**

A content provider **110** could, for example, be a on-line bookseller. An application can register with the on-line bookseller to indicate to the on-line bookseller that it wants to be informed of new releases of a specific genre. This could occur on a daily or weekly or monthly basis.

Content provider **110,** for example, on a weekly basis will send a content envelope **1810** having a book list **1812,** to push proxy **410.** It can also send a transform metadata **1814,** which can be, for example, a URL link for transforming the specific content based on the application receiving it.

In one embodiment, the book list **1812** could include numerous books, descriptions of each book including the author and a synopsis of the book. The file may, for example, be 100 KB in size.

Push proxy **410** can receive this large file and may realize, based on the client application being serviced, that a transformation to the large content file needs to be done in order to better accommodate the client which may only be able to receive, for example, 10 kilobytes of information. The transformation that is passed as a proxy metadata can therefore be applied to the book list to reduce the book list to a 10 KB modified document **1820.** This can, for example, be done by removing the synopsis, ranking the books and only including the top 50 or other transformations as would be evident to those skilled in the art.

Once the transformation is complete, the modified document **1820** is then sent to the push client **510.**

Further, the deferred retrieval message store **452,** as seen in **Figure 4****,** can be used to store the extra content that was stripped out in the transformation process.

The advantage of the above is that the bookseller can have one site and send one list to all of its clients. Since various clients will not be mobile wireless clients, the 100 KB file may be appropriate for these clients. By also providing the transformation metadata, the bookseller can have one list that it sends to everyone. As will be appreciated by those skilled in the art, most current web technologies require a separate website for a mobile client, and this is overcome by the above solution.

The above also lends itself to a syndication model and reference is now made to **Figure 19****.**

As will be appreciated by those skilled in the art, a mobile device may not wish to receive large amounts of data when network conditions are not optimal for the receiving of large amounts of data. Further, network operators may wish to avoid sending large amounts of data during peak periods of bandwidth usage in order to spread network traffic more evenly over time. This can be accomplished using a push/pull model as illustrated in **Figure 19****.**

As described with reference to **Figure 4** above, content may be provided that includes more information than the user may currently needs. For example, if the user requests location information for restaurants within his area, a service provider may wish to add advertising such as other services available in the area. However, the service provider may not wish to push this additional content immediately to the user, but instead provide a primer such as a headline or a table of contents showing the additional content.

In other situations, the content may be too large to send to the user, and the user may receive only the first part of the content and the remainder of the content is stored in a deferred retrieval message store **452.**

Thereafter, the stored content can be passed to push client **510** either by push proxy **410** or when asked for my push client **510.**

Push client **510** includes a network status monitor **1910** which can monitor the status of the network. Push client **510** may wish to only receive extra data in certain conditions. For example, on a hybrid mobile device that has a WiFi and a cellular option, it is cheaper to provide data on the WiFi connection, and thus network status monitor **1910** could wait until the push client **510** is connected to a WiFi network prior to getting the deferred content. Alternatively, network status monitor could check whether the client is roaming in a foreign network or connected to the home network in order to minimize roaming charges. Network status monitor may also check to see whether a dedicated data channel is established for the device. One skilled in the art will realize that network status monitor **1910** could also check for various other preconditions in the network before requesting deferred data to be passed to push client **510.**

A wireless network **130** could also provide information to either or both of push client **510** and push proxy **410** concerning the costs of delivery of data. As will be appreciated by those skilled in the art, various peak periods occur for the delivery of content. In the case of traffic information, the peak periods may be at the beginning and end of the workday when people are coming to and going from work. For stock quotes the peak period may be during the time that the market is open. Other peak periods will exist. In order to average the data traffic, it may be desirable for the network to charge different rates based on the current data usage in the network. Thus during peak periods a higher rate may be charged than a non-peak period such as the middle of the night. Wireless network **130** therefore provides delivery cost notifications to a deferred retrieval manager **552** on a push client **510** and to push scheduler **454** on push proxy **410.**

In one embodiment, data from content provider **110** and passed to push proxy **410** can be ranked based on its importance to the client. Certain information can be designated through metadata to be delivered immediately. Other information can be designated to be delivered when the network cost is less than a first value (for example 10¢ per megabyte) and other data may be designated to be delivered when the network costs drop below a second value (for example, 5¢ per megabyte). Thus push scheduler **454** considers the data that is stored in deferred retrieval message store **452** and instructs push agent **444** to pass deferred data to push agent **544** on push client **510.**

Alternatively, deferred retrieval manager **552** could also monitor network conditions as sent from wireless network **130** and if the data rate is below a certain rate can ask content pull broker **554** to pull content from deferred retrieval message store **452.**

Alternatively, deferred retrieval manager **552** could see that the network status is favorable for pulling larger amounts of data, such as if the mobile device has connected with a WiFi network, and ask content pull broker **554** to pull the data from deferred retrieval message store **452.**

As will be further appreciated, a user can always request to have the content pulled. Thus user request **1940** could also be used to trigger content pull broker **554** to pull the data from deferred retrieval message store **452.**

The rules stored in push scheduler **454** and deferred retrieval manager **552** could be static metadata based on a classification of content. The rules could also be based on dynamic metadata for the particular data that has been passed. In this case the content provider **110** has classified the data.

Reference is now made to **Figure 20****.** As will be appreciated by those skilled in the art, data can be one of two forms, linear or non-linear. Linear data could, for example, be arrays or strings or content that flows in a linear fashion. Non-linear data, conversely, is data that does not linearly relate to each other and can include complex dependencies with content maps or links.

For linear content, fragmentation merely involves the breaking of the data into various components based on linear progression. The data is partitioned into segments and the segments are delivered to the push client **410.** As indicated in **Figure 20****,** fragmentation processor **2010** interacts with content **2012** and decides that the content can be parsed with linear progression. The fragmentation processor **2010** next partitions the data into segments **2014, 2016** and **2018** in the example of **Figure 20****,** and, as illustrated in **Figure 20****,** passes the first segment **2014** while deferring the passing of the second and third segments **2016** and **2018** respectively.

The cursor management module **2030** keeps track of which segment has been delivered and delivers the next segment in order.

Referring to **Figure 21****,** non-linear content needs to be partitioned in a more intelligent way. Further, at the other end, in order to reconstitute the segments, metadata is required.

A fragmentation processor **2110** analyses the content based on a metadata based analysis. These could include keeping certain segments or data elements together if logically required. Fragmentation processor **2110** analyses content **2112** and partitions the content into segments based on logical rules. Each segment includes the content plus metadata including for example, dependencies, maps, and navigation rules for each segment.

Once partitioned, a first segment **2114** is sent to push client **510** and the passing of the remainder of the segments **2116** and **2118** is deferred as illustrated in **Figure 21****.** Segment navigation block **2130** deals with which segment to send next. As will be appreciated by those skilled in the art, first segment **2114** includes a data portion and a metadata portion. The metadata portion of segment **2114** is a layer of metadata that is added by the fragmentation processor **2110** to indicate to content dependencies module 564 how to reconstitute the content. Data portion of first segment **2114** can include both content and metadata associated with the channel or with the content.

Segment navigation block **2130** is adapted to process how a user travels through the data. For example, if the data is in a tree format and the user goes down a first branch of the tree, segment navigation block **2130** may pass to push client **410** other branches in the tree that can be reached from the element that the user has navigated to.

For example, a tree could include an employee database that has employee names along with a structure for the corporation. Based on **Figure 21****,** if the user navigates into a specific department of the organization, the segmentation navigation block **2130** might forward the group fragments for groups within that department. If the user then navigates into a specific group within the department, the segmentation navigation block **2130** might then pass information fragments about the employees within that group.

The above therefore requires that the data be partitioned into logical components. Identifiers are assigned to all types and content, and structural information is created passing the information with the primer.

The above therefore provides an architecture for dynamic content delivery that can be used with generic systems where applications and content can be added without changing the structure of the system. The content can be tailored to fit the application receiving it, and be fragmented according to the above.

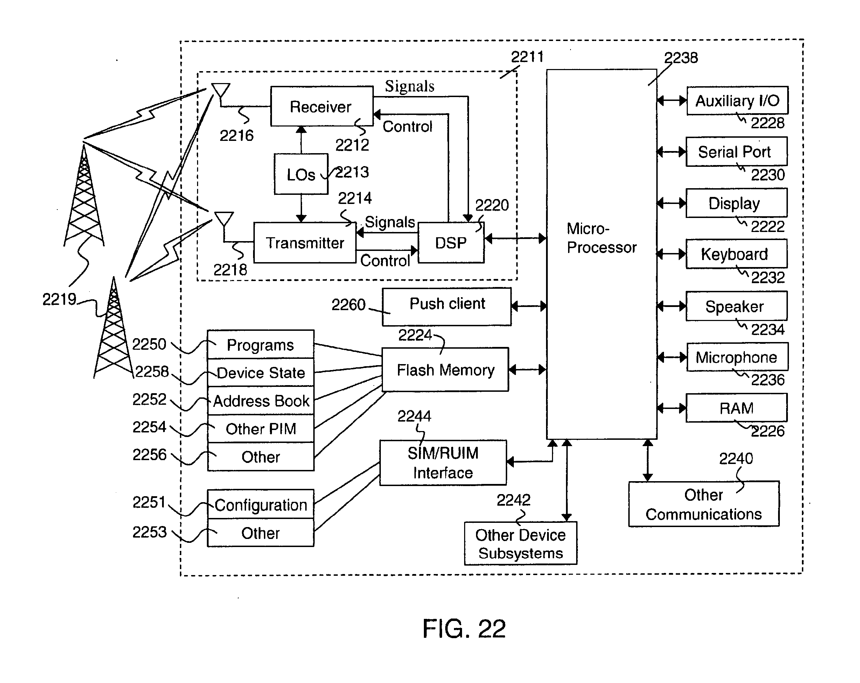

As will be appreciated, the push client and client applications can reside on any mobile device. One exemplary mobile device is described below with reference to **Figure 22****.** This is not meant to be limiting, but is provided for illustrative purposes.

**Figure 22** is a block diagram illustrating a mobile station apt to be used with preferred embodiments of the apparatus and method of the present application. Mobile station **2200** is preferably a two-way wireless communication device having at least voice and data communication capabilities. Mobile station **2200** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station **2200** is enabled for two-way communication, it will incorporate a communication subsystem **2211,** including both a receiver **2212** and a transmitter **2214,** as well as associated components such as one or more, preferably embedded or internal, antenna elements **2216** and **2218,** local oscillators (LOs) **2213,** and a processing module such as a digital signal processor (DSP) **2220.** As will be apparent to those skilled in the field of communications, the particular design of the communication subsystem **2211** will be dependent upon the communication network in which the device is intended to operate.

Network access requirements will also vary depending upon the type of network 2219. In some CDMA networks network access is associated with a subscriber or user of mobile station **2200.** A CDMA mobile station may require a removable user identity module (RUIM) or a subscriber identity module (SIM) card in order to operate on a CDMA network.. The SIM/RUIM interface **2244** is normally similar to a card-slot into which a SIM/RUIM card can be inserted and ejected like a diskette or PCMCIA card. The SIM/RUIM card can have approximately 64K of memory and hold many key configuration **2251,** and other information **2253** such as identification, and subscriber related information.

When required network registration or activation procedures have been completed, mobile station **2200** may send and receive communication signals over the network **2219.** As illustrated in **Figure 22****,** network **2219** can consist of multiple base stations communicating with the mobile device. For example, in a hybrid CDMA 1x EVDO system, a CDMA base station and an EVDO base station communicate with the mobile station and the mobile station is connected to both simultaneously. The EVDO and CDMA 1x base stations use different paging slots to communicate with the mobile device.

Signals received by antenna **2216** through communication network **2219** are input to receiver **2212,** which may perform such common receiver functions as signal amplification, frequency down conversion, filtering, channel selection and the like, and in the example system shown in **Figure 22****,** analog to digital (A/D) conversion. A/D conversion of a received signal allows more complex communication functions such as demodulation and decoding to be performed in the DSP **2220.** In a similar manner, signals to be transmitted are processed, including modulation and encoding for example, by DSP **2220** and input to transmitter **2214** for digital to analog conversion, frequency up conversion, filtering, amplification and transmission over the communication network **2219** via antenna **2218.** DSP **2220** not only processes communication signals, but also provides for receiver and transmitter control. For example, the gains applied to communication signals in receiver **2212** and transmitter **2214** may be adaptively controlled through automatic gain control algorithms implemented in DSP **2220.**

Mobile station **2200** preferably includes a microprocessor **2238** which controls the overall operation of the device. Communication functions, including at least data and voice communications, are performed through communication subsystem **2211.** Microprocessor **2238** also interacts with further device subsystems such as the display **2222,** flash memory **2224,** random access memory (RAM) **2226,** auxiliary input/output (I/O) subsystems **2228,** serial port **2230,** two or more keyboards or keypads **2232,** speaker **2234,** microphone **2236,** other communication subsystem **2240** such as a short-range communications subsystem and any other device subsystems generally designated as **2242.** Serial port **2230** could include a USB port or other port known to those in the art.

Some of the subsystems shown in **Figure 22** perform communication-related functions, whereas other subsystems may provide "resident" or on-device functions. Notably, some subsystems, such as keyboard **2232** and display **2222,** for example, may be used for both communication-related functions, such as entering a text message for transmission over a communication network, and device-resident functions such as a calculator or task list.

Operating system software used by the microprocessor **2238** is preferably stored in a persistent store such as flash memory **2224,** which may instead be a read-only memory (ROM) or similar storage element (not shown). Those skilled in the art will appreciate that the operating system, specific device applications, or parts thereof, may be temporarily loaded into a volatile memory such as RAM **2226.** Received communication signals may also be stored in RAM **2226.**

As shown, flash memory **2224** can be segregated into different areas for both computer programs **2258** and program data storage **2250, 2252, 2254** and **2256.** These different storage types indicate that each program can allocate a portion of flash memory **2224** for their own data storage requirements. Microprocessor **2238,** in addition to its operating system functions, preferably enables execution of software applications on the mobile station. A predetermined set of applications that control basic operations, including at least data and voice communication applications for example, will normally be installed on mobile station **2200** during manufacturing. Other applications could be installed subsequently or dynamically.

A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network **2219.** In a preferred embodiment, the PIM data items are seamlessly integrated, synchronized and updated, via the wireless network **2219,** with the mobile station user's corresponding data items stored or associated with a host computer system. Further applications may also be loaded onto the mobile station **2200** through the network **2219,** an auxiliary I/O subsystem **2228,** serial port **2230,** short-range communications subsystem **2240** or any other suitable subsystem **2242,** and installed by a user in the RAM **2226** or preferably a non-volatile store (not shown) for execution by the microprocessor **2238.** Such flexibility in application installation increases the functionality of the device and may provide enhanced on-device functions, communication-related functions, or both. For example, secure communication applications may enable electronic commerce functions and other such financial transactions to be performed using the mobile station **2200.**

In a data communication mode, a received signal such as a text message or web page download will be processed by the communication subsystem **2211** and input to the microprocessor **2238,** which preferably further processes the received signal for output to the display **2222,** or alternatively to an auxiliary I/O device **2228.** A push client **2260,** which could be equivalent to push clients **140** and **510,** could also process the input.

A user of mobile station **2200** may also compose data items such as email messages for example, using the keyboard **2232,** which is preferably a complete alphanumeric keyboard or telephone-type keypad, in conjunction with the display **2222** and possibly an auxiliary I/O device **2228.** Such composed items may then be transmitted over a communication network through the communication subsystem **2211.**

For voice communications, overall operation of mobile station **2200** is similar, except that received signals would preferably be output to a speaker **2234** and signals for transmission would be generated by a microphone **2236.** Alternative voice or audio I/O subsystems, such as a voice message recording subsystem, may also be implemented on mobile station **2200.** Although voice or audio signal output is preferably accomplished primarily through the speaker **2234,** display **2422** may also be used to provide an indication of the identity of a calling party, the duration of a voice call, or other voice call related information for example.

Serial port **2230** in **Figure 22****,** would normally be implemented in a personal digital assistant (PDA)-type mobile station for which synchronization with a user's desktop computer (not shown) may be desirable, but is an optional device component. Such a port **2230** would enable a user to set preferences through an external device or software application and would extend the capabilities of mobile station **2200** by providing for information or software downloads to mobile station **2200** other than through a wireless communication network. The alternate download path may for example be used to load an encryption key onto the device through a direct and thus reliable and trusted connection to thereby enable secure device communication. As will be appreciated by those skilled in the art, serial port **2230** can further be used to connect the mobile device to a computer to act as a modem.

Other communications subsystems **2240,** such as a short-range communications subsystem, is a further optional component which may provide for communication between mobile station **2200** and different systems or devices, which need not necessarily be similar devices. For example, the subsystem **2240** may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

Furthermore, one or more of the following numbered clauses may describe and relate to further aspects or features within the context of the present teaching:
1. A method for nesting processing intelligence in a content delivery architecture having at least a first processing element and a second processing element, the method
   comprising:
   creating a first envelope, said first envelope comprising second processing element metadata, said second processing element meta data adapted to be run on said second processing element; and
   forming a second envelope, said second envelope containing said first envelope and first processing element metadata adapted to be run on said first processing element.
2. The method of clause 1, wherein said first envelope further contains content payload from a content provider.
3. The method of clause 2, wherein the content provider is a service provider.
4. The method of clause 2 or clause 3, wherein said first processing element metadata
   and said second processing element metadata are specific to the content payload.
5. The method of any one of clauses 1 to 4, wherein said first processing element metadata and said second processing element metadata comprise channel metadata and/or content metadata.
6. The method of clause 5, wherein the content metadata has content expiry or content replacement rules.
7. The method any one of clauses 2 to 6, further comprising the step of propagating metadata related to a channel for said content payload to, or provisioning, said first processing element and said second processing element.
8. The method of any one of clauses 1 to 7, wherein said at least a first processing element and a second processing element comprise any of a content delivery server, a
   content delivery client or a client application.
9. The method of any one of clauses 1 to 8, wherein said method further comprises the steps of:
   extracting, at said first processing element, said first processing element metadata;
   using said first processing element metadata on said first envelope, creating a processed first envelope; and
   delivering said processed first envelope to said second processing element.
10. The method of any one of clauses 1 to 9, wherein said method further comprises, at said first processing element, adding metadata to said first envelope.
11. The method of any one of clauses 1 to 10, further comprising the step of creating a
   third envelope, said third envelope comprising said second envelope and third processing element metadata for a third processing element.
12. The method of any one of clauses 1 to 11, wherein said first processing element metadata comprises any of processing parameters, processing rules, a processing handler, processing handler code, a processing handler reference, a link to a processing handler, a link to processing handler code, and/or a link to processing handler rules.
13. A content envelope for a content delivery architecture, the content envelope comprising:
   a first envelope having content metadata for a first processing element in said content delivery architecture; and
   a second envelope having second content metadata for a second processing element in the content delivery architecture, the second envelope being nested within said first envelope.
14. The content envelope of clause 13, wherein said first processing element and said
   second processing element comprise any of a content delivery server, a content delivery client, or a client application.
15. A computer program product for adding processing intelligence to content payload
   in a dynamic content delivery architecture having at least a first processing element and a second processing element, the computer program product comprising a computer
   readable medium embodying program code means executable by a computing device,
   system or apparatus for implementing all the steps of the method of any one of clauses 1 to 12.

## Claims

1. A method of processing content at a delivery server (120, 122, 410) of a content delivery architecture (100), the method comprising:
receiving (1426, 1710, 1740, 1760), from a content provider (110), a package (610) constituted by server metadata (612) nested with a client envelope (614), the client envelope (614) containing a content (620, 632) nested with client metadata (622);
extracting (710) the server metadata (612) from the package (610);
using (1712, 1742, 1762) the server metadata (612) to process the client envelope (614) such that a processed package is provided; and
delivering (714, 1714, 1744, 1764) the processed package to a delivery client (140, 510).

2. The method of claim 1 further comprising receiving (1412), from the content provider (110), additional metadata related to a channel for the content.

3. The method of claim 2 wherein the using (1712, 1742, 1762) step comprises:
first processing (810) the client envelope according to the additional metadata; and
second processing (712), after the first processing, the client envelope according to the server metadata.

4. The method of any one of claims 1-3 wherein the content is an envelope (620) containing a payload (632) for consumption by an application (150, 910, 912, 914, 916, 1020) registered with the delivery client (140, 510).

5. The method of claim 4 wherein the envelope (620) containing the payload further contains application metadata (630) for facilitating processing of the payload (632) by the application (150).

6. A method of processing content at a delivery client (140, 510) of a content delivery architecture (100), the method comprising:
receiving (1428, 1714, 1744, 1764), from a delivery server (120, 122, 410), a package (614) constituted by client metadata (622) nested with a content envelope (620), the content envelope (620) containing a content (632) nested with application metadata (630);
extracting (720) the client metadata (622) from the package (614);
using (722, 1716, 1746, 1766) the client metadata (622) to process the content envelope (620) such that a processed package is provided; and
delivering (724, 1718, 1748, 1768) the processed package to an application (150) registered with the delivery client (140, 510).

7. The method of claim 6 further comprising receiving, from a content provider (110) or from the delivery server (120, 122, 410), additional metadata related to a channel for the content.

8. The method of claim 7 wherein the using (722, 1716, 1746, 1766) step comprises:
first processing (820) the content envelope, (620) according to the additional metadata; and
second processing (722), after the first processing, the content envelope (620) according to the client metadata (622).

9. The method of any one of claims 6-8 wherein the content (620, 632) is an envelope containing a payload (632) for consumption by the application (150) registered with the delivery client (140, 510).

10. The method of claim 9 wherein the envelope containing the payload further contains the application metadata (630) for facilitating processing (1720, 1728, 1750, 1770) of the payload (632) by the application (150).

11. The method of any one of claims 4, 5, 9, 10 wherein the package is configured such that the payload (632) is contained in multiple envelopes (614, 620).

12. The method of any one of claims 5,6-11 wherein at least one of the server metadata, the client metadata and the application metadata includes information related to expiring or replacing (466, 566) the content.

13. A mobile device comprising a delivery client configured to perform the method of any one of claims 6-12.

14. A computing device comprising a delivery server configured to perform the method of any one of claims 1-5 and 12.

15. A computer readable medium storing instructions adapted to cause performance , when executed by a computing device, all the steps of the method as defined in any one of claims 1-12.

## Patentansprüche

1. Ein Verfahren zum Verarbeiten von Inhalt an einem Liefer-Server (120, 122, 410) einer Inhaltlieferungs-Architektur (100), wobei das Verfahren aufweist:
Empfangen (1426, 1710, 1740, 1760), von einem Inhaltsanbieter (110), eines Pakets (610), das aus Server-Metadaten (612) besteht, die mit einem Client-Umschlag (614) verschachtelt sind, wobei der Client-Umschlag (614) einen Inhalt (620, 632) enthält, der mit Client-Metadaten (622) verschachtelt ist;
Extrahieren (710) der Server-Metadaten (612) aus dem Paket (610);
Verwenden (1712, 1742, 1762) der Server-Metadaten (612) zum Verarbeiten des Client-Umschlags (614) derart, dass ein verarbeitetes Paket vorgesehen wird; und
Liefern (714, 1714, 1744, 1764) des verarbeiteten Pakets an einen Liefer-Client (140, 510).

2. Das Verfahren gemäß Anspruch 1, das weiter aufweist ein Empfangen (1412), von dem Inhaltsanbieter (110), von zusätzlichen Metadaten, die einen Kanal für den Inhalt betreffen.

3. Das Verfahren gemäß Anspruch 2, wobei der Verwendungsschritt (1712, 1742, 1762) aufweist:
erstes Verarbeiten (810) des Client-Umschlags gemäß den zusätzlichen Metadaten; und
zweites Verarbeiten (712), nach der ersten Verarbeitung, des Client-Umschlags gemäß den Server-Metadaten.

4. Das Verfahren gemäß einem der Ansprüche 1-3, wobei der Inhalt ein Umschlag (620) ist, der eine Nutzlast (632) zum Verbrauch durch eine Anwendung (150, 910, 912, 914, 916, 1020) enthält, die mit dem Liefer-Client (140, 510) registriert ist.

5. Das Verfahren gemäß Anspruch 4, wobei der Umschlag (620), der die Nutzlast enthält, weiter Anwendungs-Metadaten (630) enthält zum Erleichtern eines Verarbeitens der Nutzlast (632) durch die Anwendung (150).

6. Ein Verfahren zum Verarbeiten von Inhalt an einem Liefer-Client (124, 510) einer Inhaltlieferungs-Architektur (100), wobei das Verfahren aufweist:
Empfangen (1428, 1714, 1744, 1764), von einem Liefer-Server (120, 122, 410), eines Pakets (614), das aus Client-Metadaten (622) besteht, die mit einem Inhalt-Umschlag (620) verschachtelt sind, wobei der Inhalt-Umschlag (620) einen Inhalt (632) enthält, der mit Anwendungs-Metadaten (630) verschachtelt ist;
Extrahieren (720) der Client-Metadaten (622) aus dem Paket (614);
Verwenden (722, 1716, 1746, 1766) der Client-Metadaten (622) zum Verarbeiten des Inhalt-Umschlags (620) derart, dass ein verarbeitetes Paket vorgesehen wird; und
Liefern (724, 1718, 1748, 1768) des verarbeiteten Pakets an eine Anwendung (150), die mit dem Liefer-Client (140, 510) registriert ist.

7. Das Verfahren gemäß Anspruch 6, das weiter aufweist ein Empfangen, von einem Inhaltsanbieter (110) oder von dem Liefer-Server (120, 122, 410), von zusätzlichen Metadaten, die einen Kanal für den Inhalt betreffen.

8. Das Verfahren gemäß Anspruch 7, wobei der Verwendungsschritt (722, 1716, 1746, 1766) aufweist:
erstes Verarbeiten (820) des Inhalt-Umschlags (620) gemäß den zusätzlichen Metadaten; und
zweites Verarbeiten (722), nach der ersten Verarbeitung, des Inhalt-Umschlags (620) gemäß den Client-Metadaten (622).

9. Das Verfahren gemäß einem der Ansprüche 6-8, wobei der Inhalt (620, 632) ein Umschlag ist, der eine Nutzlast (632) zum Verbrauch durch die Anwendung (150) enthält, die mit dem Liefer-Client (140, 510) registriert ist.

10. Das Verfahren gemäß Anspruch 9, wobei der Umschlag, der die Nutzlast enthält, weiter die Anwendungs-Metadaten (630) enthält zum Erleichtern eines Verarbeitens (1720, 1728, 1750, 1770) der Nutzlast (632) durch die Anwendung (150).

11. Das Verfahren gemäß einem der Ansprüche 4, 5, 9, 10, wobei das Paket derart konfiguriert ist, dass die Nutzlast (632) in mehreren Umschlägen (614, 620) enthalten ist.

12. Das Verfahren gemäß einem der Ansprüche 5, 6-11, wobei zumindest eines der Server-Metadaten, der Client-Metadaten und der Anwendungs-Metadaten Information umfasst, die ein Ablaufen oder Ersetzen (466, 566) des Inhalts betrifft.

13. Eine mobile Vorrichtung, die einen Liefer-Client aufweist, der konfiguriert ist zum Durchführen des Verfahrens gemäß einem der Ansprüche 6-12.

14. Eine Computervorrichtung, die einen Liefer-Server aufweist, der konfiguriert ist zum Durchführen des Verfahrens gemäß einem der Ansprüche 1-5 und 12.

15. Ein computerlesbares Medium, das Anweisungen speichert, die ausgebildet sind, wenn von einer Computervorrichtung ausgeführt, eine Durchführung aller Schritte des Verfahrens gemäß einem der Ansprüche 1-12 zu veranlassen.

## Revendications

1. Procédé de traitement de contenu au niveau d'un serveur de distribution (120, 122, 410) d'une architecture de distribution de contenu (100), le procédé comprenant le fait :
de recevoir (1426, 1710, 1740, 1760), à partir d'un fournisseur de contenu (110), un paquet (610) constitué par des métadonnées de serveur (612) intégrées dans une enveloppe client (614), l'enveloppe client (614) contenant un contenu (620, 632) intégré dans des métadonnées de client (622) ;
d'extraire (710) les métadonnées de serveur (612) à partir du paquet (610) ;
d'utiliser (1712, 1742, 1762) les métadonnées de serveur (612) pour traiter l'enveloppe client (614) de manière à fournir un paquet traité ; et
de distribuer (714, 1714, 1744, 1764) le paquet traité à un client de distribution (140, 510).

2. Procédé de la revendication 1, comprenant en outre le fait de recevoir (1412), à partir du fournisseur de contenu (110), des métadonnées supplémentaires relatives à un canal pour le contenu.

3. Procédé de la revendication 2, dans lequel l'étape d'utilisation (1712, 1742, 1762) comprend :
un premier traitement (810) de l'enveloppe client conformément aux métadonnées supplémentaires ; et
un deuxième traitement (712), après le premier traitement, de l'enveloppe client conformément aux métadonnées de serveur.

4. Procédé de l'une quelconque des revendications 1 à 3, dans lequel le contenu est une enveloppe (620) contenant des données utiles (632) à exploiter par une application (150, 910, 912, 914, 916, 1020) enregistrée avec le client de distribution (140, 510).

5. Procédé de la revendication 4, dans lequel l'enveloppe (620) contenant les données utiles contient en outre des métadonnées d'application (630) pour faciliter le traitement des données utiles (632) par l'application (150).

6. Procédé de traitement de contenu au niveau d'un client de distribution (140, 510) d'une architecture de distribution de contenu (100), le procédé comprenant le fait :
de recevoir (1428, 1714, 1744, 1764), à partir d'un serveur de distribution (120, 122, 410), un paquet (614) constitué par des métadonnées de client (622) intégrées dans une enveloppe de contenu (620), l'enveloppe de contenu (620) contenant un contenu (632) intégré dans des métadonnées d'application (630) ;
d'extraire (720) les métadonnées de client (622) à partir du paquet (614) ;
d'utiliser (722, 1716, 1746, 1766) les métadonnées de client (622) pour traiter l'enveloppe de contenu (620) de manière à fournir un paquet traité ; et
de distribuer (724, 1718, 1748, 1768) le paquet traité à une application (150) enregistrée avec le client de distribution (140, 510).

7. Procédé de la revendication 6, comprenant en outre le fait de recevoir, à partir d'un fournisseur de contenu (110) ou à partir du serveur de distribution (120, 122, 410), des métadonnées supplémentaires relatives à un canal pour le contenu.

8. Procédé de la revendication 7, dans lequel l'étape d'utilisation (722, 1716, 1746, 1766) comprend :
un premier traitement (820) de l'enveloppe de contenu (620) conformément aux métadonnées supplémentaires ; et
un deuxième traitement (722), après le premier traitement, de l'enveloppe de contenu (620) conformément aux métadonnées de client (622).

9. Procédé de l'une quelconque des revendications 6 à 8, dans lequel le contenu (620, 632) est une enveloppe contenant des données utiles (632) à exploiter par l'application (150) enregistrée avec le client de distribution (140, 510).

10. Procédé de la revendication 9, dans lequel l'enveloppe contenant les données utiles contient en outre les métadonnées d'application (630) pour faciliter le traitement (1720, 1728, 1750, 1770) des données utiles (632) par l'application (150).

11. Procédé de l'une quelconque des revendications 4, 5, 9, 10, dans lequel le paquet est configuré de sorte que les données utiles (632) soient contenues dans des enveloppes multiples (614, 620).

12. Procédé de l'une quelconque des revendications 5, 6 à 11, dans lequel les métadonnées de serveur et/ou les métadonnées de client et/ou les métadonnées d'application comportent des informations relatives à l'expiration ou au remplacement (466, 566) du contenu.

13. Dispositif mobile comprenant un client de distribution configuré pour mettre en oeuvre le procédé de l'une quelconque des revendications 6 à 12.

14. Dispositif informatique comprenant un serveur de distribution configuré pour mettre en oeuvre le procédé de l'une quelconque des revendications 1 à 5 et 12.

15. Support lisible par ordinateur stockant des instructions adaptées pour provoquer l'exécution, lorsqu'elles sont exécutées par un dispositif informatique, de toutes les étapes du procédé tel que défini dans l'une quelconque des revendications 1 à 12.
